# EUROPEAN PATENT APPLICATION

(11) **EP 4 815 611 A1**
(43) Date of publication of application: **30.09.2026**
(21) Application number: 23959181.1
(22) Date of filing: 22.11.2023
(51) Int. Cl.: H04W 76/00

(54) **INFORMATION PROCESSING METHOD AND APPARATUS AND STORAGE MEDIUM**

(71) Applicant: Beijing Xiaomi Mobile Software Co., Ltd., Beijing 100085 (CN)
(72) Inventor: QIAO, Xuemei, Beijing 100085 (CN)
(74) Representative: Dehns Germany Partnerschaft mbB
(86) International application number: PCT/CN2023/133468
(87) International publication number: WO 2025/107208

(57) **Abstract**

Disclosed in embodiments of the present disclosure are an information processing method and apparatus and a storage medium. The method comprises: sending first information to a network device, wherein the first information is used for determining whether a terminal supports an available time slot counting mechanism, and the terminal supports repeated sending of an Msg5; determining a first time-domain resource, wherein the first time-domain resource is used for repeatedly sending the Msg5; and repeatedly sending the Msg5 to the network device on the first time-domain resource. Thus, the terminal can repeatedly send the Msg5 on the determined time-domain resource, so that the effective number of repeated transmissions of the message is ensured as much as possible to achieve coverage enhancement, thereby making up for the coverage loss, effectively improving communication reliability, and improving system communication efficiency.

## Description

### TECHNICAL FIELD

The present disclosure relates to the field of communication technology, and in particular to an information processing method, an information processing apparatus, and a storage medium.

### BACKGROUND

Transmitting a channel multiple times in the time domain can achieve coverage enhancement for the channel. For example, coverage enhancement can be performed for a Physical Uplink Control Channel (PUCCH), a Physical Uplink Shared Channel (PUSCH) scheduled by Downlink Control Information (DCI) format 0_1 with Cyclic Redundancy Check (CRC) scrambled by a Cell-Radio Network Temporary Identifier (C-RNTI) (DCI format 0_1 with CRC scrambled by C-RNTI), a Message 3 (Msg3) channel, a Physical Random Access Channel (PRACH), etc.

### SUMMARY

Embodiments of the present disclosure propose an information processing method, an information processing apparatus, and a storage medium.

A first aspect of the embodiments of the present disclosure provides an information processing method, performed by a terminal, the terminal supporting Message 5 (Msg5) repetition, the method including: sending first information to a network device, wherein the first information is used for determining whether the terminal supports an available slot counting mechanism; determining a first time domain resource, wherein the first time domain resource is used for the Msg5 repetition; and repeatedly sending an Msg5 to the network device on the first time domain resource.

A second aspect of the embodiments of the present disclosure provides an information processing method, performed by a network device, the method including: receiving first information sent by a terminal, the terminal supporting Message 5 (Msg5) repetition; determining, based on the first information, whether the terminal supports an available slot counting mechanism; determining a first time domain resource, wherein the first time domain resource is used for the Msg5 repetition; and receiving an Msg5 sent by the terminal on the first time domain resource.

A third aspect of the embodiments of the present disclosure provides an information processing method, including: sending, by a terminal, first information to a network device, the terminal supporting Message 5 (Msg5) repetition; determining, based on the first information by the network device, whether the terminal supports an available slot counting mechanism; determining, by the terminal and the network device, a first time domain resource, wherein the first time domain resource is used for the Msg5 repetition; and repeatedly sending, by the terminal, an Msg5 to the network device on the first time domain resource.

A fourth aspect of the present disclosure provides a terminal, including: a transceiver module, configured to send first information to a network device, wherein the first information is used for determining whether the terminal supports an available slot counting mechanism; and a processing module, configured to determine a first time domain resource, wherein the first time domain resource is used for Message 5 (Msg5) repetition; wherein the transceiver module is further configured to repeatedly send an Msg5 to the network device on the first time domain resource.

A fifth aspect of the present disclosure provides a network device, including: a transceiver module, configured to receive first information sent by a terminal, the terminal supporting Message 5 (Msg5) repetition; and a processing module, configured to determine, based on the first information, whether the terminal supports an available slot counting mechanism; wherein the processing module is further configured to determine a first time domain resource, wherein the first time domain resource is used for the Msg5 repetition; the transceiver module is further configured to receive an Msg5 sent by the terminal on the first time domain resource.

The solutions provided in the embodiments of the present disclosure, by sending the first information to the network device, in which the first information is used for determining whether the terminal supports an available slot counting mechanism, and the terminal supports the Msg5 repetition; determining the first time domain resource for the Msg5 repetition; and repeatedly sending an Msg5 to the network device on the first time domain resource; the terminal is able to repeatedly send the Msg5 on the determined time domain resource, which can ensure the effective number of message repetitions as much as possible to achieve coverage enhancement, compensate for coverage loss gaps, effectively improve communication reliability, and enhance system communication efficiency.

### BRIEF DESCRIPTION OF THE DRAWINGS

To describe the technical solutions in embodiments of the present disclosure or the related art clearly, the following briefly introduces the drawings required for describing the embodiments of the present disclosure or the related art.
FIG. 1 is a schematic diagram of a communication system according to an embodiment of the present disclosure.
FIG. 2A is an interaction schematic diagram of an information processing method according to an embodiment of the present disclosure;
FIG. 2B is an interaction schematic diagram of an information processing method according to an embodiment of the present disclosure;
FIG. 2C is a schematic diagram of an uplink Medium Access Control (MAC) Protocol Data Unit (PDU) according to an embodiment of the present disclosure;
FIG. 2D is a schematic diagram of carrying a Message 4 (Msg4) according to an embodiment of the present disclosure;
FIGS. 3A-3C are flow diagrams of an information processing method according to embodiments of the present disclosure;
FIGS. 4A-4C are flow diagrams of an information processing method according to embodiments of the present disclosure;
FIG. 5 is a flow diagram of an information processing method according to an embodiment of the present disclosure;
FIG. 6A is a block diagram of a terminal according to an embodiment of the present disclosure;
FIG. 6B is a block diagram of a network device according to an embodiment of the present disclosure;
FIG. 7A is a schematic diagram of a communication device according to an embodiment of the present disclosure;
FIG. 7B is a schematic diagram of a chip according to an embodiment of the present disclosure.

### DETAILED DESCRIPTION

Embodiments of the present disclosure propose an information processing method, an information processing apparatus, and a storage medium.

In a first aspect, an embodiment of the present disclosure proposes an information processing method, performed by a terminal, the terminal supporting Message 5 (Msg5) repetition, the method including: sending first information to a network device, wherein the first information is used for determining whether the terminal supports an available slot counting mechanism; determining a first time domain resource, wherein the first time domain resource is used for Msg5 repetition; and repeatedly sending an Msg5 to the network device on the first time domain resource.

In the above embodiment, the terminal can repeatedly send the Message 5 on the determined time domain resource, which can ensure the effective number of message repetitions as much as possible to achieve coverage enhancement, compensate for coverage loss gaps, effectively improve communication reliability, and enhance system communication efficiency.

In combination with some embodiments of the first aspect, in some embodiments, the method further includes: sending second information to the network device, in which the second information indicates that the terminal requests or supports the Msg5 repetition.

In the above embodiment, the available slot counting mechanism acts as an independent feature, and whether the terminal supports this feature can be reported to the network device, effectively improving the flexibility of the solution.

In combination with some embodiments of the first aspect, in some embodiments, the first information indicates that the terminal requests or supports the Msg5 repetition; the first information is used for determining that the terminal supports the available slot counting mechanism.

In the above embodiment, the terminal supporting the Msg5 repetition also may support the available slot counting mechanism, which can effectively save signaling resources.

In combination with some embodiments of the first aspect, in some embodiments, the method further includes: receiving a first signaling sent by the network device, the first signaling indicating an enabling state of the available slot counting mechanism.

In the above embodiment, the network device can semi-statically or dynamically configure the enabling state of the available slot counting mechanism, improving the flexibility of the solution.

In combination with some embodiments of the first aspect, in some embodiments, the method further comprises: determining, based on an agreement of a protocol, that the first time domain resource includes at least one time slot determined based on the available slot counting mechanism, wherein the terminal supports the available slot counting mechanism.

In combination with some embodiments of the first aspect, in some embodiments, the first signaling indicates that the enabling state of the available slot counting mechanism is enabled, and the terminal does not support the available slot counting mechanism, and determining the first time domain resource comprises: determining the first time domain resource based on consecutive time slots.

In the above embodiment, when the enabling state dynamically configured by the network device conflicts with the terminal capability, the time domain resource is determined according to the terminal capability, ensuring communication reliability.

In combination with some embodiments of the first aspect, in some embodiments, the first signaling comprises at least one of: a System Information Block (SIB) or Other System Information (OSI); a Radio Resource Control (RRC) signaling comprised in a Message 4 (Msg4); or Downlink Control Information (DCI) for scheduling a Physical Uplink Shared Channel (PUSCH), wherein the PUSCH is configured to carry the Msg5.

In the above embodiment, the network device can dynamically configure the enabling state of the available slot counting mechanism through multiple signaling types, improving the flexibility and universality of the solution.

In combination with some embodiments of the first aspect, in some embodiments, the terminal supports the available slot counting mechanism, and determining the first time domain resource comprises: performing, by the terminal, the Msg5 repetition in an unpaired spectrum, and determining the first time domain resource based on at least one of the following information, the first time domain resource comprising at least one time slot determined based on the available slot counting mechanism: Timing Division Duplexing Uplink Downlink Common Configuration (TDD-UL-DL-ConfigurationCommon); Timing Division Duplexing Uplink Downlink Dedicated Configuration (TDD-UL-DL-ConfigurationDedicated); or a Synchronization Signal Block (SSB) and/or a Physical Broadcast Channel (PBCH) block having an index.

In the above embodiment, the time domain resource for repeatedly sending the Msg5 can be determined based on the communication mode and related configuration of the terminal, improving transmission reliability and ensuring that the number of repetitions can compensate for coverage loss gaps, effectively achieving coverage enhancement.

In combination with some embodiments of the first aspect, in some embodiments, the terminal supports the available slot counting mechanism, and determining the first time domain resource comprises: performing, by the terminal, the Msg5 repetition based on Half Duplex-Frequency Division Duplexing (HD-FDD) in a paired spectrum, and determining the first time domain resource based on at least one of the following information, the first time domain resource comprising at least one time slot determined based on the available slot counting mechanism: a Synchronization Signal Block (SSB) and/or a Physical Broadcast Channel (PBCH) block having an index; a transition time between a transmitter and a receiver of the terminal; or a transition time between a receiver and a transmitter of the terminal.

In the above embodiment, the time domain resource for repeatedly sending the Msg5 can be determined based on the communication mode and related configuration of the terminal, improving transmission reliability and ensuring that the number of repetitions can compensate for coverage loss gaps, effectively achieving coverage enhancement.

In combination with some embodiments of the first aspect, in some embodiments, the method further includes: sending third information to the network device, wherein the third information indicates an HD-FDD type of the terminal.

In the above embodiment, the communication mode of the terminal can be reported to the network device, effectively improving transmission reliability.

In combination with some embodiments of the first aspect, in some embodiments, the first information is comprised in at least one of: resource information of a Message 1 (Msg1), the resource information comprising at least one of a time domain resource, a frequency domain resource, or a code domain resource; a Radio Resource Control (RRC) signaling comprised in a Message 3 (Msg3); or uplink Medium Access Control (MAC) Protocol Data Unit (PDU) information comprised in a Message 3 (Msg3).

In the above embodiment, the terminal can report the capability related to the available slot counting mechanism through multiple signaling types, improving the flexibility and universality of the solution.

In combination with some embodiments of the first aspect, in some embodiments, the second information is comprised in at least one of: resource information of an Msg1, the resource information comprising at least one of a time domain resource, a frequency domain resource, or a code domain resource; an RRC signaling comprised in an Msg3; or uplink MAC PDU information comprised in an Msg3.

In the above embodiment, the terminal can report the capability related to Msg5 repetition through multiple signaling types, improving the flexibility and universality of the solution.

In combination with some embodiments of the first aspect, in some embodiments, the third information is comprised in at least one of: resource information of an Msg1, the resource information comprising at least one of a time domain resource, a frequency domain resource, or a code domain resource; an RRC signaling comprised in an Msg3; or uplink MAC PDU information comprised in an Msg3.

In the above embodiment, the terminal can report the communication mode of the terminal through multiple signaling types, improving the flexibility and universality of the solution.

A second aspect of the present disclosure proposes an information processing method, performed by a network device, the method comprising: receiving first information sent by a terminal, the terminal supporting Message 5 (Msg5) repetition; determining, based on the first information, whether the terminal supports an available slot counting mechanism; determining a first time domain resource, wherein the first time domain resource is used for the Msg5 repetition; and receiving an Msg5 sent by the terminal on the first time domain resource.

In the above embodiment, the terminal can repeatedly send the Message 5 on the determined time domain resource, which can ensure the effective number of message repetitions as much as possible to achieve coverage enhancement, compensate for coverage loss gaps, effectively improve communication reliability, and enhance system communication efficiency.

In combination with some embodiments of the second aspect, in some embodiments, the first information indicates whether the terminal supports the available slot counting mechanism; the method further comprises: receiving second information sent by the terminal, wherein the second information indicates that the terminal supports the Msg5 repetition.

In combination with some embodiments of the second aspect, in some embodiments, the first information indicates that the terminal requests or supports the Msg5 repetition; the method further comprises: determining, based on the first information, that the terminal supports the available slot counting mechanism.

In combination with some embodiments of the second aspect, in some embodiments, the method further comprises: sending a first signaling to the terminal, the first signaling indicating an enabling state of the available slot counting mechanism.

In combination with some embodiments of the second aspect, in some embodiments, the first signaling indicates that the enabling state of the available slot counting mechanism is enabled, and the terminal does not support the available slot counting mechanism, and determining the first time domain resource comprises: determining the first time domain resource based on consecutive time slots.

In combination with some embodiments of the second aspect, in some embodiments, the method further comprises: determining, based on an agreement of a protocol, that the first time domain resource includes at least one time slot determined based on the available slot counting mechanism, wherein the terminal supports the available slot counting mechanism.

In combination with some embodiments of the second aspect, in some embodiments, the first signaling comprises at least one of: a System Information Block (SIB) or Other System Information (OSI); a Radio Resource Control (RRC) signaling included in a Message 4 (Msg4); or Downlink Control Information (DCI) for scheduling a Physical Uplink Shared Channel (PUSCH), wherein the PUSCH is configured to carry the Msg5.

In combination with some embodiments of the second aspect, in some embodiments, the terminal supports the available slot counting mechanism, and determining the first time domain resource comprises: the terminal performing the Msg5 repetition in an unpaired spectrum, determining the first time domain resource based on at least one of the following information, the first time domain resource comprising at least one time slot determined based on the available slot counting mechanism: Timing Division Duplexing Uplink Downlink Common Configuration (TDD-UL-DL-ConfigurationCommon); Timing Division Duplexing Uplink Downlink Dedicated Configuration (TDD-UL-DL-ConfigurationDedicated); or a Synchronization Signal Block (SSB) and/or a Physical Broadcast Channel (PBCH) block having an index.

In combination with some embodiments of the second aspect, in some embodiments, the terminal supports the available slot counting mechanism, and determining the first time domain resource comprises: the terminal performing the Msg5 repetition based on Half Duplex-Frequency Division Duplexing (HD-FDD) in a paired spectrum, determining the first time domain resource based on at least one of the following information, the first time domain resource comprising at least one time slot determined based on the available slot counting mechanism: a Synchronization Signal Block (SSB) and/or a Physical Broadcast Channel (PBCH) block having an index; a transition time between a transmitter and a receiver of the terminal; or a transition time between a receiver and a transmitter of the terminal.

In combination with some embodiments of the second aspect, in some embodiments, the method further includes: receiving third information sent by the terminal, wherein the third information indicates an HD-FDD type of the terminal.

In combination with some embodiments of the second aspect, in some embodiments, the first information is comprised in at least one of: resource information of a Message 1 (Msg1), the resource information comprising at least one of a time domain resource, a frequency domain resource, or a code domain resource; a Radio Resource Control (RRC) signaling comprised in a Message 3 (Msg3); or uplink Medium Access Control (MAC) Protocol Data Unit (PDU) information comprised in a Message 3 (Msg3).

In combination with some embodiments of the second aspect, in some embodiments, the second information is comprised in at least one of: resource information of an Msg1, the resource information comprising at least one of a time domain resource, a frequency domain resource, or a code domain resource; an RRC signaling comprised in an Msg3; or uplink MAC PDU information comprised in an Msg3.

In combination with some embodiments of the second aspect, in some embodiments, the third information is comprised in at least one of: resource information of an Msg1, the resource information comprising at least one of a time domain resource, a frequency domain resource, or a code domain resource; an RRC signaling comprised in an Msg3; or uplink MAC PDU information comprised in an Msg3.

A third aspect of the present disclosure proposes an information processing method, comprising: sending, by a terminal, first information to a network device, the terminal supporting Message 5 (Msg5) repetition; determining, based on the first information by the network device, whether the terminal supports an available slot counting mechanism; determining, by the terminal and the network device, a first time domain resource, wherein the first time domain resource is used for the Msg5 repetition; and repeatedly sending, by the terminal, an Msg5 to the network device on the first time domain resource.

In the above embodiment, the terminal can repeatedly send the Message 5 on the determined time domain resource, which can ensure the effective number of message repetitions as much as possible to achieve coverage enhancement, compensate for coverage loss gaps, effectively improve communication reliability, and enhance system communication efficiency.

In combination with some embodiments of the third aspect, in some embodiments, the first information indicates whether the terminal supports the available slot counting mechanism; the method further comprises: sending, by the terminal, second information to the network device, wherein the second information indicates that the terminal supports the Msg5 repetition; sending, by the network device, a first signaling to the terminal, the first signaling indicating an enabling state of the available slot counting mechanism.

In combination with some embodiments of the third aspect, in some embodiments, the first information indicates that the terminal supports the Msg5 repetition; the method further comprises: determining, based on the first information by the network device, that the terminal supports the available slot counting mechanism.

In combination with some embodiments of the third aspect, in some embodiments, the method further comprises: sending, by the network device, a first signaling to the terminal, the first signaling indicating an enabling state of the available slot counting mechanism.

In combination with some embodiments of the third aspect, in some embodiments, the first signaling indicates that the enabling state of the available slot counting mechanism is enabled, and the terminal does not support the available slot counting mechanism, and determining the first time domain resource comprises: determining, by the terminal and the network device, the first time domain resource based on consecutive time slots.

In combination with some embodiments of the third aspect, in some embodiments, the first signaling comprises at least one of: a System Information Block (SIB) or Other System Information (OSI); a Radio Resource Control (RRC) signaling included in a Message 4 (Msg4); or Downlink Control Information (DCI) for scheduling a Physical Uplink Shared Channel (PUSCH), wherein the PUSCH is configured to carry the Msg5.

In combination with some embodiments of the third aspect, in some embodiments, the terminal supports the available slot counting mechanism, and determining, by the terminal and the network device, the first time domain resource comprises: the terminal performing the Msg5 repetition in an unpaired spectrum, determining the first time domain resource based on at least one of the following information, the first time domain resource comprising at least one time slot determined based on the available slot counting mechanism: Timing Division Duplexing Uplink Downlink Common Configuration (TDD-UL-DL-ConfigurationCommon); Timing Division Duplexing Uplink Downlink Dedicated Configuration (TDD-UL-DL-ConfigurationDedicated); or a Synchronization Signal Block (SSB) and/or a Physical Broadcast Channel (PBCH) block having an index.

In combination with some embodiments of the third aspect, in some embodiments, the terminal supports the available slot counting mechanism, and determining, by the terminal and the network device, the first time domain resource comprises: the terminal performing the Msg5 repetition based on Half Duplex-Frequency Division Duplexing (HD-FDD) in a paired spectrum, determining the first time domain resource based on at least one of the following information, the first time domain resource comprising at least one time slot determined based on the available slot counting mechanism: a Synchronization Signal Block (SSB) and/or a Physical Broadcast Channel (PBCH) block having an index; a transition time between a transmitter and a receiver of the terminal; or a transition time between a receiver and a transmitter of the terminal.

In combination with some embodiments of the third aspect, in some embodiments, the method further includes: sending, by the terminal, third information to the network device, wherein the third information indicates an HD-FDD type of the terminal.

In combination with some embodiments of the third aspect, in some embodiments, the first information is comprised in at least one of: resource information of a Message 1 (Msg1), the resource information comprising at least one of a time domain resource, a frequency domain resource, or a code domain resource; a Radio Resource Control (RRC) signaling comprised in a Message 3 (Msg3); or uplink Medium Access Control (MAC) Protocol Data Unit (PDU) information comprised in a Message 3 (Msg3).

In combination with some embodiments of the third aspect, in some embodiments, the second information is comprised in at least one of: resource information of an Msg1, the resource information comprising at least one of a time domain resource, a frequency domain resource, or a code domain resource; an RRC signaling comprised in an Msg3; or uplink MAC PDU information comprised in an Msg3.

In combination with some embodiments of the third aspect, in some embodiments, the third information is comprised in at least one of: resource information of an Msg1, the resource information comprising at least one of a time domain resource, a frequency domain resource, or a code domain resource; an RRC signaling comprised in an Msg3; or uplink MAC PDU information comprised in an Msg3.

A fourth aspect of the present disclosure proposes a terminal, including at least one of a transceiver module or a processing module. The terminal is configured to execute the method of the first aspect or any optional implementation of the first aspect.

A fifth aspect of the present disclosure proposes a network device, including at least one of a transceiver module or a processing module. The network device is configured to execute the method of the second aspect or any optional implementation of the second aspect.

A sixth aspect of the present disclosure proposes a terminal, including: one or more processors. The terminal is configured to execute the method of the first aspect or any optional implementation of the first aspect.

A seventh aspect of the present disclosure proposes a network device, including: one or more processors. The network device is configured to execute the method of the second aspect or any optional implementation of the second aspect.

An eighth aspect of the present disclosure proposes a communication system, including: a terminal and a network device. The terminal is configured to execute the method as described in the first aspect or any optional implementation of the first aspect, and the network device is configured to execute the method as described in the second aspect or any optional implementation of the second aspect.

A ninth aspect of the present disclosure proposes a storage medium for storing instructions that, when executed on a communication device, cause the communication device to execute the method as described in the first aspect or any optional implementation of the first aspect, or the method as described in the second aspect or any optional implementation of the second aspect.

A tenth aspect of the present disclosure proposes a program product that, when executed by a communication device, causes the communication device to execute the method as described in the first aspect or any optional implementation of the first aspect, or the method as described in the second aspect or any optional implementation of the second aspect.

An eleventh aspect of the present disclosure proposes a computer program, which, when run on a computer, causes the computer to execute the method as described in the first aspect or any optional implementation of the first aspect, or the method as described in the second aspect or any optional implementation of the second aspect.

A twelfth aspect of the present disclosure provides a chip or a chip system. The chip or chip system includes a processing circuit configured to execute the method as described in the first aspect or any optional implementation of the first aspect, or the method as described in the second aspect or any optional implementation of the second aspect.

It can be understood that the above-mentioned terminal, network device, communication system, storage medium, program product, computer program, chip or chip system are all used to execute the methods disclosed in the embodiments of the present disclosure. Therefore, for the beneficial effects achievable by them, reference can be made to the corresponding beneficial effects in the methods, which are not repeated here.

Embodiments of the present disclosure propose an information processing method, an information processing apparatus, and a storage medium. In some embodiments, terms such as information processing method and communication method can be interchanged, terms such as information processing apparatus and communication device can be interchanged, and terms such as information processing system and communication system can be interchanged.

The embodiments of the present disclosure are not exhaustive, but are merely illustrative of some embodiments, and are not intended to limit the scope of protection of the present disclosure. Under the condition of no contradiction, each step in a certain embodiment may be implemented as an independent embodiment, and the steps can be combined arbitrarily. For example, a solution after removing some steps in a certain embodiment can also be implemented as an independent embodiment, and the order of steps in a certain embodiment can be arbitrarily exchanged. Furthermore, optional implementations in a certain embodiment may be arbitrarily combined. Moreover, the embodiments may be arbitrarily combined with each other. For example, some or all of the steps of different embodiments may be arbitrarily combined, and one embodiment may be arbitrarily combined with optional implementations of other embodiments.

In the embodiments of the present disclosure, unless otherwise specified and logically conflicting, terms and/or descriptions among the embodiments are consistent and may be referenced mutually, and technical features in different embodiments may be combined to form new embodiments according to their inherent logical relationships.

The terms used in the embodiments of the present disclosure are only for the purpose of describing specific embodiments and are not intended as limitations of the present disclosure.

In the embodiments of the present disclosure, unless otherwise specified, elements expressed in the singular form, such as "a", "an", "the", "above", "said", "aforementioned", "this", etc., may mean "one and only one", or may mean "one or more", "at least one", etc. For example, when articles such as "a", "an", "the" in English are used in translation, the noun after the article can be understood as a singular expression or a plural expression.

In the embodiments of the present disclosure, "multiple" means two or more.

In some embodiments, terms such as "at least one of", "one or more", "a plurality of" may be interchangeable.

In some embodiments, descriptions such as "at least one of A and B", "A and/or B", "in one case A, in another case B", "in response to one case A, in response to another case B" may include, depending on the situation, the following technical solutions: in some embodiments A (executing A regardless of B); in some embodiments B (executing B regardless of A); in some embodiments selecting from A and B for execution (A and B are selectively executed); in some embodiments A and B (both A and B are executed). Similar applies when there are more branches like A, B, C, etc.

In some embodiments, descriptions such as "A or B" may include, depending on the situation, the following technical solutions: in some embodiments A (executing A regardless of B); in some embodiments B (executing B regardless of A); in some embodiments selecting from A and B for execution (A and B are selectively executed). Similar applies when there are more branches like A, B, C, etc.

Prefixes such as "first" and "second" in the embodiments of the present disclosure are merely used to distinguish different described objects and do not constitute limitations on the position, order, priority, quantity, or content of the described objects. For the statements regarding the described objects, reference may be made to the claims or the context description in the embodiments, and should not be construed as unnecessary limitations due to the use of prefixes. For example, if the described object is "field", then ordinal numbers before "field" in "first field" and "second field" do not limit the position or order between the "fields", "first" and "second" do not limit whether the modified "fields" are in the same message, nor do they limit the order of the "first field" and "second field". As another example, if the described object is "level", then the ordinal numbers before "level" in "first level" and "second level" do not limit the priority between the "levels". As another example, the number of described objects is not limited by ordinal numbers and can be one or more. Taking "first apparatus" as an example, the number of "apparatuses" can be one or more. Furthermore, objects modified by different prefixes may be the same or different. For example, if the described object is "apparatus", then the "first apparatus" and the "second apparatus" may be the same apparatus or different apparatuses, and their types may be the same or different. As another example, if the described object is "information", then the "first information" and the "second information" may be the same information or different information, and their content may be the same or different.

In some embodiments, "comprising A", "including A", "used to indicate A", "carrying A" can be interpreted as directly carrying A or indirectly indicating A.

In some embodiments, terms such as "in response to...", "in response to determining...", "in the case of...", "when...", "while...", "if...", "provided that..." may be interchangeable.

In some embodiments, terms such as "greater than", "greater than or equal to", "not less than", "more than", "more than or equal to", "not fewer than", "higher than", "higher than or equal to", "not lower than", "above" may be interchangeable, and terms such as "less than", "less than or equal to", "not greater than", "fewer than", "fewer than or equal to", "not more than", "lower than", "lower than or equal to", "not higher than", "below" may be interchangeable.

In some embodiments, an apparatus, etc., may be interpreted as physical or virtual, and its name is not limited to the names recorded in the embodiments. Terms such as "apparatus", "equipment", "device", "circuit", "network element", "node", "function", "unit", "section", "system", "network", "chip", "chip system", "entity", "subject" may be interchangeable.

In some embodiments, "network" may be interpreted as a device included in the network, such as an access network device, a core network device, etc.

In some embodiments, an "access network device (AN device)" may also be referred to as "radio access network device (RAN device)", "base station (BS)", "radio base station", "fixed station". In some embodiments, it may also be understood as "node", "access point (AP)", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier (CC)", "bandwidth part (BWP)", etc.

In some embodiments, "terminal" or "terminal device" may be referred to as "user equipment (UE)", "user terminal", "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, etc.

In some embodiments, the acquisition of data, information, etc., may comply with the laws and regulations of the country where it is located.

In some embodiments, data, information, etc., may be obtained after obtaining user consent.

Furthermore, each element, each row, or each column in a table of the embodiments of the present disclosure may be implemented as an independent embodiment, and combinations of any elements, any rows, or any columns may also be implemented as independent embodiments.

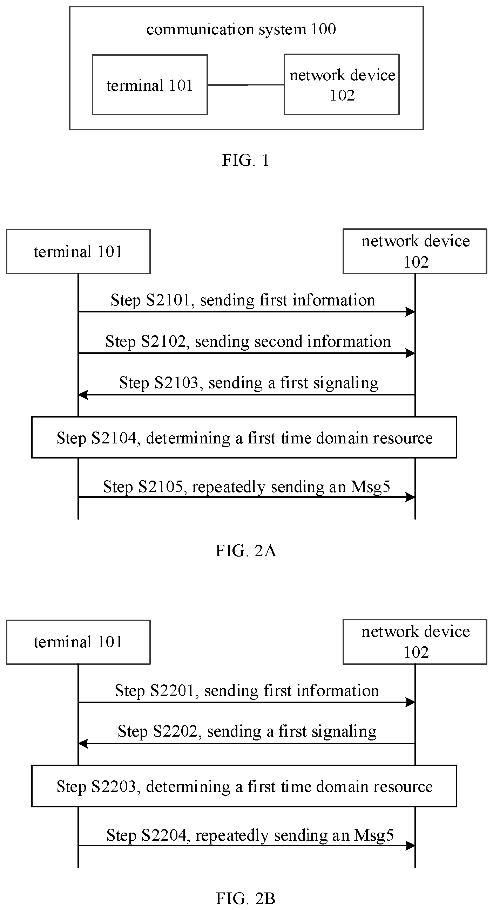

FIG. 1 is a schematic diagram of a communication system according to an embodiment of the present disclosure.

As shown in FIG. 1, a communication system 100 includes a terminal 101 and a network device 102.

In some embodiments, the terminal 101 includes, for example, at least one of a mobile phone, a wearable device, an Internet of Things device, a car with a communication function, a smart car, a tablet computer (Pad), a computer with a wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, or a wireless terminal device in smart home, but is not limited thereto.

In some embodiments, an access network device 102 is, for example, a node or device that connects a terminal to a wireless network. The access network device may include at least one of an evolved NodeB (eNB), a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a Wi-Fi system, but is not limited thereto.

In some embodiments, the technical solutions of the present disclosure may be applicable to an Open RAN architecture. In this case, interfaces between or within access network devices involved in the embodiments of the present disclosure may become internal interfaces of the Open RAN, and the processes and information interactions between these internal interfaces may be implemented through software or programs.

In some embodiments, the access network device may be composed of a central unit (CU) and distributed units (DUs), where the CU may also be referred to as a control unit. Using a CU-DU structure, a protocol layer of the access network device can be split, with some functions of the protocol layer placed under centralized control of the CU and part or all of the remaining functions of the protocol layer distributed in the DUs, the DUs being centrally controlled by the CU, but is not limited thereto.

It can be understood that the communication system described in the embodiments of the present disclosure is to clearly illustrate the technical solutions of the embodiments of the present disclosure, and does not constitute a limitation on the technical solutions disclosed in the embodiments of the present disclosure. Those skilled in the art may appreciate that with the evolution of system architecture and the emergence of new service scenarios, the technical solutions disclosed in the embodiments of the present disclosure are also applicable to similar technical problems.

The following embodiments of the present disclosure may be applied to the communication system 100 shown in FIG. 1, or to some entities thereof, but are not limited thereto. The entities shown in FIG. 1 are examples, and the communication system may include all or part of the entities in FIG. 1, or may include other entities not shown in FIG. 1. The number and form of each entity are arbitrary, and each entity may be physical or virtual. The connection relationships between the entities are examples, and the entities may be connected with each other or not, and the connections may be in any manner, direct or indirect, wired or wireless.

The embodiments of the present disclosure may be applied to Long Term Evolution (LTE), LTE-Advanced (LTE-A), LTE-Beyond (LTE-B), SUPER 3G, International Mobile Telecommunications-Advanced (IMT-Advanced), a 4th generation mobile communication system (4G), a 5th generation mobile communication system (5G), 5G New Radio (NR), Future Radio Access (FRA), New-Radio Access Technology (RAT), New Radio (NR), New radio access (NX), Future generation radio access (FX), Global System for Mobile communication (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-Wideband (UWB), Bluetooth (registered trademark), a Public Land Mobile Network (PLMN), a Device-to-Device (D2D) system, a Machine to Machine (M2M) system, an Internet of Things (IoT) system, Vehicle-to-Everything (V2X), a system using other communication methods, and a next-generation system extended based on them. Furthermore, multiple systems may be combined (e.g., LTE or LTE-A combined with 5G).

In some embodiments, sending a channel multiple times in the time domain can achieve coverage enhancement for the channel. For example, coverage enhancement can be performed for a Physical Uplink Control Channel (PUCCH), a Physical Uplink Shared Channel (PUSCH) scheduled by Downlink Control Information (DCI) format 0_1 with Cyclic Redundancy Check (CRC) scrambled by a Cell-Radio Network Temporary Identifier (C-RNTI) (DCI format 0_1 with CRC scrambled by C-RNTI), a Message 3 (Msg3) channel, a Physical Random Access Channel (PRACH), etc.

In some embodiments, there is no coverage enhancement for the Message 5 (Msg5) or a PUSCH scheduled by DCI format 0_0 with CRC scrambled by C-RNTI (DCI format 0_0 with CRC scrambled by C-RNTI). The aforementioned channels are uplink channels sent by the terminal after receiving a Message 4 (Msg4) and before receiving a UE-dedicated Radio Resource Control (RRC) signaling (UE dedicated RRC signaling). In an embodiment, these uplink channels are used to carry at least one of the following information: Msg5 (including at least one of the following messages: an RRC setup complete message (RRCSetupComplete), an RRC resume complete message (RRCResumeComplete), or an RRC reestablishment complete message (RRCReestablishmentComplete)), a security message, a Non-Access Stratum (NAS) message, a terminal capability (UE capability) or other uplink messages.

In summary, how to design a series of mechanisms to support Msg5 repetition may be considered.

The information processing method and information processing apparatus provided by the present disclosure are described in detail below with reference to the accompanying drawings.

FIG. 2A is an interaction schematic diagram of an information processing method according to an embodiment of the present disclosure. As shown in FIG. 2A, an embodiment of the present disclosure relates to an information processing method, the method includes the following steps.

Step S2101, a terminal 101 sends first information.

In some embodiments, a network device 102 receives the first information sent by the terminal 101.

In some embodiments, the first information is used for determining whether the terminal supports an available slot counting mechanism.

In some embodiments, the first information is used by the network device 102 to determine whether the terminal 101 supports the available slot counting mechanism.

In some embodiments, the available slot counting mechanism is treated as an independent feature, and the terminal 101 can indicate whether the terminal 101 supports this feature (available slot counting mechanism) through signaling related to the terminal capability.

In some embodiments, the name of the first information is not limited; it may be, for example, "available slot counting", "available slot counting capability", "supporting available slot counting mechanism", "terminal capability", "additional terminal capability", etc.

In some embodiments, the first information is comprised in at least one of: resource information of a Message 1 (Msg1); a Radio Resource Control (RRC) signaling comprised in a Message 3 (Msg3); or uplink Medium Access Control (MAC) Protocol Data Unit (PDU) information comprised in a Message 3 (Msg3).

In an embodiment, the resource information of the Msg1 may include at least one of: a time domain resource, a frequency domain resource, or a code domain resource.

In an embodiment, the RRC signaling included in the Msg3 may include at least one of: an RRC setup request (RRCSetupRequest), an RRC resume request (RRCResumeRequest), or an RRC re-establishment request (RRCReestablishmentRequest).

The RRCSetupRequest is used to request to establish an RRC connection, the RRCResumeRequest is used to request to resume an RRC connection, and the RRCReestablishmentRequest is used to request to re-establish an RRC connection.

In an embodiment, the RRC signaling included in the Msg3 may be an existing RRC signaling or other newly added RRC signaling.

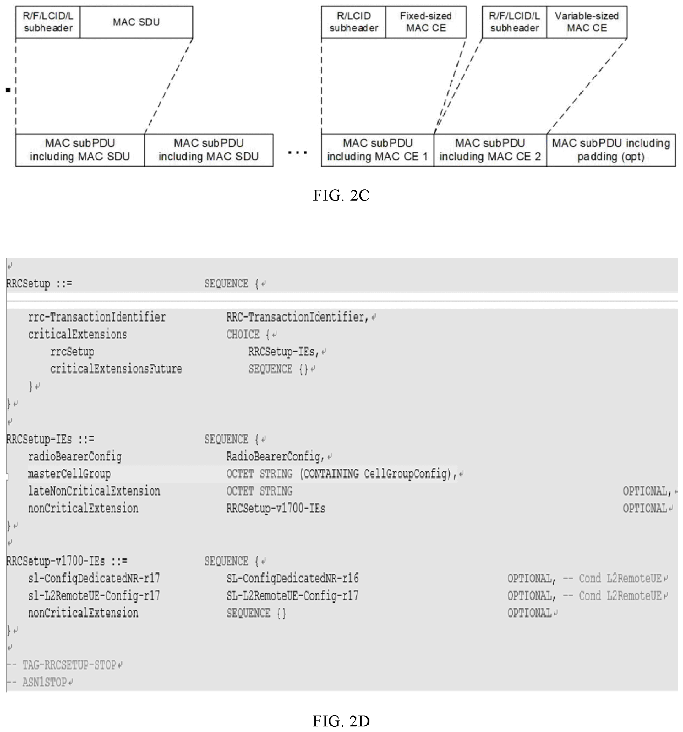

In an embodiment, as shown in FIG. 2C, MAC PDU information included in the Msg3 may include at least one of: an MAC subheader corresponding to a Service Data Unit (SDU) in the MAC PDU, a new Logical Channel ID (LCID), a new MAC Control Element (CE), or reusing a legacy MAC CE. The legacy MAC CE refers to an existing (or legacy) MAC CE supported by R16/R17.

For example, the first information may be sent to the network device 102 through a subheader corresponding to the MAC SDU in the MAC PDU including the MAC SDU. In an embodiment, the MAC PDU may be a PDU for sending any information of the Msg3.

In an embodiment, the MAC signaling may be an existing MAC signaling or other newly added MAC signaling.

Step S2102, the terminal 101 sends second information.

In some embodiments, the network device 102 receives the second information sent by the terminal 101.

In some embodiments, the second information indicates that the terminal supports the Msg5 repetition.

In some embodiments, the second information indicates that the terminal 101 requests the Msg5 repetition.

In some embodiments, the second information is used by the network device 102 to determine that the terminal 101 supports the Msg5 repetition.

In some embodiments, the name of the second information is not limited; it may be, for example, "Msg5 repetition", "Msg5 coverage enhancement", "terminal capability", etc.

In some embodiments, the second information is included in at least one of: resource information of an Msg1; an RRC signaling comprised in an Msg3; or MAC PDU information comprised in an Msg3.

In an embodiment, the resource information of the Msg1 may include at least one of a time domain resource, a frequency domain resource, or a code domain resource.

In an embodiment, the RRC signaling included in the Msg3 may include at least one of: an RRCSetupRequest, an RRCResumeRequest, or an RRCReestablishmentRequest.

The RRCSetupRequest is used to request to establish an RRC connection, the RRCResumeRequest is used to request to resume an RRC connection, and the RRCReestablishmentRequest is used to request to re-establish an RRC connection.

In an embodiment, the RRC signaling included in the Msg3 may be an existing RRC signaling or other newly added RRC signaling.

In an embodiment, as shown in FIG. 2C, the MAC PDU information included in the Msg3 may include at least one of: an MAC subheader corresponding to an MAC SDU in the MAC PDU, a new LCID, a new MAC CE, or reusing a legacy MAC CE. The legacy MAC CE refers to an existing (or legacy) MAC CE supported by R16/R17.

In an embodiment, the MAC signaling may be an existing MAC signaling or other newly added MAC signaling.

Step S2103, the network device 102 sends a first signaling.

In some embodiments, the terminal 101 receives the first signaling sent by the network device 102.

In some embodiments, the first signaling indicates an enabling state of the available slot counting mechanism for the terminal 101.

In an embodiment, the first signaling indicates the enabling state of the available slot counting mechanism when the terminal 101 performs the Msg5 repetition and subsequent PUSCH repetition.

In an embodiment, the enabling state includes enabling (enabled) or disabling (disabled).

In some embodiments, the first signaling may include at least one of: a System Information Block (SIB) or Other System Information (OSI); a Radio Resource Control (RRC) signaling comprised in a Message 4 (Msg4); or Downlink Control Information (DCI) for scheduling a Physical Uplink Shared Channel (PUSCH), wherein the PUSCH is configured to carry the Msg5.

In an embodiment, the SIB, such as an SIB1, can be used as the first signaling to indicate the enabling state of the available slot counting mechanism.

In an embodiment, the RRC signaling included in the Msg4 may include at least one of: RRCSetup, RRCResume, or RRCReestablishment.

The RRCSetup is used to establish an RRC connection, the RRCResume is used to resume an RRC connection, and the RRCReestablishment is used to re-establish an RRC connection. In an embodiment, an RRCSetup message may be as shown in FIG. 2D.

In an embodiment, the first signaling can be configured dynamically or semi-statically.

In an embodiment, when at least two of the above multiple signaling types are used as the first signaling to indicate the enabling state of the available slot counting mechanism for the terminal 101, the terminal 101 determines the enabling state of the available slot counting mechanism based on priorities of the multiple signaling types.

In an embodiment, the priorities are: DCI > RRC signaling included in the Msg4 > the SIB or OSI.

For example, both the DCI and the RRC signaling included in the Msg4 are used as the first signaling to indicate the enabling state of the available slot counting mechanism when the terminal 101 performs Msg5 repetition and subsequent PUSCH repetition, and the terminal 101 determines the enabling state of the available slot counting mechanism based on the DCI.

Step S2104, the terminal 101 and the network device 102 determine a first time domain resource.

In some embodiments, the terminal 101 and the network device 102 can determine the first time domain resource, in which the first time domain resource is used for the Msg5 repetition.

In some embodiments, the terminal 101 receives the first signaling sent by the network device 102, which indicates that the enabling state of the available slot counting mechanism for the terminal 101 is enabled, but the terminal 101 does not support the available slot counting mechanism. The terminal 101 and the network device 102 determine the first time domain resource based on consecutive time slots.

In an embodiment, the first signaling is an SIB or OSI.

In some embodiments, the terminal 101 does not support the available slot counting mechanism, and the first signaling indicates that the enabling state of the available slot counting mechanism for the terminal 101 is disabled. The terminal 101 and the network device 102 determine the first time domain resource based on consecutive time slots.

In some embodiments, the terminal 101 supports the available slot counting mechanism, and the first signaling indicates that the enabling state of the available slot counting mechanism for the terminal 101 is disabled. The terminal 101 and the network device 102 determine the first time domain resource based on consecutive time slots.

In some embodiments, the terminal 101 supports the available slot counting mechanism, and the network device 102 does not enable the available slot counting mechanism for the terminal 101. The terminal 101 and the network device 102 determine the first time domain resource based on consecutive time slots.

In some embodiments, the terminal 101 supports the available slot counting mechanism, and the first signaling indicates that the enabling state of the available slot counting mechanism for the terminal 101 is enabled. The first time domain resource determined by the terminal 101 and the network device 102 includes at least one time slot determined based on the available slot counting mechanism.

In some embodiments, it may be agreed by a protocol that a terminal 101 supporting the available slot counting mechanism may determine the first time domain resource based on the available slot counting mechanism.

In some embodiments, the terminal 101 performs the transmission of the Msg5 based on an unpaired spectrum. The terminal 101 and the network device 102 determine the first time domain resource based on at least one of the following information, the first time domain resource comprising at least one time slot determined based on the available slot counting mechanism: *TDD-UL-DL-ConfigurationCommon; TDD-UL-DL-ConfigurationDedicated*; or a Synchronization Signal Block (SSB) and/or a Physical Broadcast Channel (PBCH) block having an index.

In an embodiment, the index of the SSB is provided by an Information Element (IE) *ssb-PositionsInBurst* (a position of the SSB in a burst).

In an embodiment, the SSB is a Cell Defining SSB (CD-SSB) and/or a Non-Cell Defining SSB (NCD-SSB).

In an embodiment, the terminal 101 determining the first time domain resource based on the *TDD-UL-DL-ConfigurationCommon*, including: if the terminal 101 determines that a symbol indicated by a certain row in a used resource allocation table overlaps with a downlink symbol indicated by the *TDD-UL-DL-Confi*gurationCommon, the terminal 101 determines that the time slot with which the symbol overlaps is not counted into N·K time slots, i.e., it is not counted as a time slot for the Msg5 repetition.

K is a number of repetitions of Msg5, N is a number of time slots occupied by a Transport Block (TB), and in the embodiments of the present application, the value of N is 1.

In an embodiment, if a configuration of the terminal 101 includes the *TDD-UL-DL-ConfigurationDedicated*, the terminal 101 determining the first time domain resource based on the *TDD-UL-DL-ConfigurationDedicated*, including: if the terminal 101 determines that a symbol indicated by a certain row in the used resource allocation table overlaps with a downlink symbol indicated by the *TDD-UL-DL-ConfigurationDedicated*, the terminal 101 determines that the time slot with which the symbol overlaps is not counted into the N·K time slots, i.e., it is not counted as a time slot for the Msg5 repetition.

In an embodiment, the terminal 101 determining the first time domain resource based on the SSB and/or PBCH block having an index, including: if the terminal 101 determines that a symbol indicated by a certain row in the used resource allocation table overlaps with a symbol of an SS/PBCH block provided by the *ssb-PositionsInBurst*, the terminal 101 determines that the time slot with which the symbol overlaps is not counted into the N·K time slots, i.e., it is not counted as a time slot for the Msg5 repetition.

In some embodiments, the terminal 101 performs transmission of the Msg5 based on Half Duplex-Frequency Division Duplexing (HD-FDD) in a paired spectrum. The terminal 101 and the network device 102 determine the first time domain resource based on at least one of the following information, the first time domain resource comprising at least one time slot determined based on the available slot counting mechanism: a Synchronization Signal Block (SSB) and/or a Physical Broadcast Channel (PBCH) block having an index; a transition time between a transmitter (Tx) and a receiver (Rx) of the terminal 101; or a transition time between a receiver (Rx) and a transmitter (Tx) of the terminal 101.

In an embodiment, the index of the SSB and/or PBCH block is provided by *ssb-PositionsInBurst* (a position of the SSB in a burst).

In an embodiment, the SSB is a CD-SSB and/or an NCD-SSB.

In an embodiment, the terminal 101 determining the first time domain resource based on the SSB and/or PBCH block having an index, including: if the terminal 101 determines that a symbol indicated by a certain row in a used resource allocation table overlaps with a symbol of an SS/PBCH block provided by the *ssb-PositionsInBurst*, the terminal 101 determines that the time slot with which the symbol overlaps is not counted into the N·K time slots, i.e., it is not counted as a time slot for the Msg5 repetition.

In an embodiment, the terminal 101 determining the first time domain resource based on the transition time between Tx and Rx, including: if the terminal 101 determines that a symbol indicated by a certain row in the used resource allocation table overlaps with a symbol included in the transition time between Tx and Rx, the terminal 101 determines that the time slot with which the symbol overlaps is not counted into the N·K time slots, i.e., it is not counted as a time slot for the Msg5 repetition.

In an embodiment, the terminal 101 determining the first time domain resource based on the transition time between Rx and Tx, including: if the terminal 101 determines that a symbol indicated by a certain row in the used resource allocation table overlaps with a symbol included in the transition time between Rx and Tx, the terminal 101 determines that the time slot with which the symbol overlaps is not counted into the N·K time slots, i.e., it is not counted as a time slot for the Msg5 repetition.

In an embodiment, the terminal 101 may send third information to the network device, in which the third information indicates an HD-FDD type of the terminal 101.

In some embodiments, the name of the third information is not limited; it may be, for example, "HD-FDD type", etc.

Similar to the first and second information, in an embodiment, the third information is included in at least one of the following: resource information of an Msg1; an RRC signaling included in an Msg3; or MAC PDU information included in an Msg3.

In an embodiment, the resource information of the Msg1 may include at least one of: a time domain resource, a frequency domain resource, or a code domain resource.

In an embodiment, the RRC signaling included in the Msg3 may include at least one of: an RRCSetupRequest, an RRCResumeRequest, or an RRCReestablishmentRequest.

In an embodiment, the RRC signaling included in the Msg3 may be an existing RRC signaling or other newly added RRC signaling.

In an embodiment, the MAC PDU information included in the Msg3 may include at least one of: an MAC subheader corresponding to an MAC SDU in the MAC PDU, a new LCID, a new MAC CE, or reusing a legacy MAC CE. The legacy MAC CE refers to an existing (or legacy) MAC CE supported by R16/R17.

For example, the third information may be sent to the network device 102 through a subheader corresponding to the MAC SDU in the MAC PDU including the MAC SDU. In an embodiment, the MAC PDU may be a PDU for sending any information of the Msg3.

In an embodiment, the MAC signaling may be an existing MAC signaling or other newly added MAC signaling.

In some embodiments, the terminal 101 determines the first time domain resource based on a number of Msg5 repetitions. For example, the number of Msg5 repetitions is 4. In some embodiments, the terminal 101 may determine 4 consecutive time slots as the first time domain resource. In some embodiments, the terminal 101 may determine 4 available time slots as the first time domain resource based on the available slot counting mechanism.

In some embodiments, the terminal 101 and the network device 102 may determine the first time domain resource simultaneously, or may have a temporal order and there is no limitation on the temporal order.

Step S2105, the terminal 101 repeatedly sends an Msg5.

In some embodiments, the terminal 101 repeatedly sends the Msg5 on the first time domain resource determined above.

In some embodiments, names of information etc. are not limited to those recorded in the embodiments. Terms such as "information", "message", "signal", "signaling", "report", "configuration", "indication", "instruction", "command", "channel", "parameter", "field", "symbol", "code", "codebook", "codeword", "codepoint", "bit", "data", "program", "chip" may be interchangeable.

In some embodiments, names of information etc. are not limited to those recorded in the embodiments. Terms such as "information", "message", "signal", "signaling", "report", "configuration", "indication", "instruction", "command", "channel", "parameter", "field", "symbol", "code", "codebook", "codeword", "codepoint", "bit", "data", "program", "chip" may be interchangeable.

In some embodiments, terms such as "physical downlink shared channel (PDSCH)", "DL data" may be interchangeable, and terms such as "physical uplink shared channel (PUSCH)", "UL data" may be interchangeable.

In some embodiments, terms such as "radio", "wireless", "radio access network (RAN)", "access network (AN)", "RAN-based" may be interchangeable.

In some embodiments, terms such as "resource block (RB)", "physical resource block (PRB)", "sub-carrier group (SCG)", "resource element group (REG)", "PRB pair", "RB pair", "resource element (RE)", "sub-carrier" may be interchangeable.

In some embodiments, "acquire", "obtain", "get", "receive", "transmit", "bidirectional transmission", "send and/or receive" can be interchanged, and can be interpreted as receiving from another entity, obtaining from a protocol, obtaining from a higher layer, processing by itself, autonomous implementation, etc.

In some embodiments, terms such as "send", "transmit", "report", "deliver", "transmission", "bidirectional transmission", "send and/or receive" may be interchangeable.

In some embodiments, terms such as "certain", "preset", "predefined", "set", "indicated", "some", "any", "first" can be interchanged. "Certain A", "preset A", "predefined A", "set A", "indicated A", "some A", "any A", "first A" can be interpreted as A pre-specified in a protocol, etc., or as A obtained through setting, configuration, or indication, etc., or as a specific A, some A, any A, or first A, etc., but is not limited thereto.

In some embodiments, determination or judgment can be performed by a value represented by 1 bit (0 or 1), or by a Boolean value represented by true or false, or by comparison of numerical values (e.g., comparison with a predetermined value), but is not limited thereto.

The communication method involved in the embodiments of the present disclosure may include at least one of steps S2101 to S2105. For example, step 2101 may be implemented as an independent embodiment, steps 2101+2103 may be implemented as an independent embodiment, steps 2101+2102+2103 may be implemented as an independent embodiment, steps 2101+2103+2104+2105 may be implemented as an independent embodiment, steps 2103+2104+2105 may be implemented as an independent embodiment, steps 2102+2103+2104+2105 may be implemented as an independent embodiment, steps 2101+2102+2103+2104+2105 may be implemented as an independent embodiment, etc., but is not limited thereto.

In some embodiments, step 2102 is optional, and one or more of these steps may be omitted or replaced in different embodiments.

In some embodiments, step 2103 is optional, and one or more of these steps may be omitted or replaced in different embodiments.

In some embodiments, reference may be made to other optional implementations described before or after the description corresponding to FIG. 2A.

FIG. 2B is an interaction schematic diagram of an information processing method according to an embodiment of the present disclosure. As shown in FIG. 2B, an embodiment of the present disclosure relates to an information processing method, the method includes the following steps.

Step S2201, a terminal 101 sends first information.

In some embodiments, a network device 102 receives the first information sent by the terminal 101.

In some embodiments, the first information indicates that the terminal 101 supports the Msg5 repetition; the first information is used to determine that the terminal 101 supports an available slot counting mechanism.

In some embodiments, the second information is used to indicate that the terminal 101 requests Msg5 repetition.

In some embodiments, the first information is used by the network device 102 to determine that the terminal 101 supports the Msg5 repetition; and is used by the network device 102 to determine that the terminal 101 supports the available slot counting mechanism.

In some embodiments, if the terminal 101 supports the Msg5 repetition, the terminal 101 may support the available slot counting mechanism. That is, when the terminal 101 reports the capability of Msg5 repetition, it implicitly reports that the terminal 101 supports the available slot counting mechanism.

In some embodiments, the name of the first information is not limited; it may be, for example, "Msg5 repetition", "Msg5 coverage enhancement", "terminal capability", "additional terminal capability", etc.

In some embodiments, the first information is included in at least one of: resource information of a Message 1 (Msg1); a Radio Resource Control (RRC) signaling comprised in a Message 3 (Msg3); a Medium Access Control (MAC) signaling included in a Message 3 (Msg3); or an MAC subheader of a Message 3 (Msg3).

In an embodiment, the resource information of the Msg1 may include at least one of: a time domain resource, a frequency domain resource, or a code domain resource.

In an embodiment, the RRC signaling included in Msg3 may include at least one of: an RRCSetupRequest, an RRCResumeRequest, or an RRCReestablishmentRequest.

The RRCSetupRequest is used to request to establish an RRC connection, the RRCResumeRequest is used to request to resume an RRC connection, and the RRCReestablishmentRequest is used to request to re-establish an RRC connection.

In an embodiment, the RRC signaling included in Msg3 may be an existing RRC signaling or other newly added RRC signaling.

In an embodiment, the MAC PDU information included in the Msg3 may include at least one of: an MAC subheader corresponding to an MAC SDU in the MAC PDU, a new LCID, a new MAC CE, or reusing a legacy MAC CE. The legacy MAC CE refers to an existing (or legacy) MAC CE supported by R16/R17.

For example, the third information may be sent to the network device 102 through a subheader corresponding to the MAC SDU in the MAC PDU including the MAC SDU. In an embodiment, the MAC PDU may be a PDU for sending any information of the Msg3.

In an embodiment, the MAC signaling may be an existing MAC signaling or other newly added MAC signaling.

Step S2202, the network device 102 sends a first signaling.

In some embodiments, the terminal 101 receives the first signaling sent by the network device 102.

In some embodiments, the first signaling indicates an enabling state of an available slot counting mechanism for the terminal 101.

In an embodiment, the first signaling indicates the enabling state of the available slot counting mechanism when the terminal 101 performs Msg5 repetition and subsequent PUSCH repetition.

In an embodiment, the enabling state includes enabling or disabling.

In some embodiments, the first signaling may include at least one of: a System Information Block (SIB) or Other System Information (OSI); a Radio Resource Control (RRC) signaling included in a Message 4 (Msg4); or Downlink Control Information (DCI) for scheduling a Physical Uplink Shared Channel (PUSCH), wherein the PUSCH is configured to carry the Msg5.

In an embodiment, the SIB, such as an SIB1, can be used as the first signaling to indicate the enabling state of the available slot counting mechanism.

In an embodiment, the RRC signaling included in Msg4 may include at least one of: RRCSetup, RRCResume, or RRCReestablishment.

The RRCSetup is used to establish an RRC connection, the RRCResume is used to resume an RRC connection, and the RRCReestablishment is used to re-establish an RRC connection. In an embodiment, an RRCSetup message may be as shown in FIG. 2D.

In an embodiment, the first signaling can be configured dynamically or semi-statically.

In an embodiment, when at least two of the above multiple signaling types are used as the first signaling to indicate the enabling state of the available slot counting mechanism for the terminal 101, the terminal 101 determines the enabling state of the available slot counting mechanism based on priorities of the multiple signaling types.

In an embodiment, the priorities are: DCI > RRC signaling included in the Msg4 > the SIB or OSI.

For example, both the DCI and the RRC signaling included in the Msg4 are used as the first signaling to indicate the enabling state of the available slot counting mechanism when the terminal 101 performs Msg5 repetition and subsequent PUSCH repetition, and the terminal 101 determines the enabling state of the available slot counting mechanism based on the DCI.

Step S2203, the terminal 101 and the network device 102 determine a first time domain resource.

In some embodiments, the terminal 101 and the network device 102 can determine the first time domain resource, in which the first time domain resource is used for the Msg5 repetition.

In some embodiments, the terminal 101 receives the first signaling sent by the network device 102, which indicates that the enabling state of the available slot counting mechanism for the terminal 101 is enabled, but the terminal 101 does not support the available slot counting mechanism. The terminal 101 and the network device 102 determine the first time domain resource based on consecutive time slots.

In an embodiment, the first signaling is an SIB or OSI.

In some embodiments, the terminal 101 does not support the available slot counting mechanism, and the first signaling indicates that the enabling state of the available slot counting mechanism for the terminal 101 is disabled. The terminal 101 and the network device 102 determine the first time domain resource based on consecutive time slots.

In some embodiments, the terminal 101 supports the available slot counting mechanism, and the first signaling indicates that the enabling state of the available slot counting mechanism for the terminal 101 is disabled. The terminal 101 and the network device 102 determine the first time domain resource based on consecutive time slots.

In some embodiments, the terminal 101 supports the available slot counting mechanism, and the network device 102 does not enable the available slot counting mechanism for the terminal 101. The terminal 101 and the network device 102 determine the first time domain resource based on consecutive time slots.

In some embodiments, the terminal 101 supports the available slot counting mechanism, and the first signaling indicates that the enabling state of the available slot counting mechanism for the terminal 101 is enabled. The first time domain resource determined by the terminal 101 and the network device 102 includes at least one time slot determined based on the available slot counting mechanism.

In some embodiments, it may be agreed by a protocol that a terminal 101 supporting the Msg5 repetition (i.e., a terminal 101 supporting the available slot counting mechanism) may determine the first time domain resource based on the available slot counting mechanism.

In an embodiment, the terminal 101 performs the transmission of the Msg5 based on an unpaired spectrum. The terminal 101 and the network device 102 determine the first time domain resource based on at least one of the following information, the first time domain resource comprising at least one time slot determined based on the available slot counting mechanism: *TDD-UL-DL-ConfigurationCommon; TDD-UL-DL-ConfigurationDedicated*; or a Synchronization Signal Block (SSB) and/or a Physical Broadcast Channel (PBCH) block having an index.

In an embodiment, the index of the SSB is provided by an Information Element (IE) *ssb-PositionsInBurst* (a position of the SSB in a burst).

In an embodiment, the SSB is a CD-SSB and/or an NCD-SSB.

In an embodiment, the terminal 101 determining the first time domain resource based on the *TDD-UL-DL-ConfigurationCommon*, including: if the terminal 101 determines that a symbol indicated by a certain row in a used resource allocation table overlaps with a downlink symbol indicated by the *TDD-UL-DL-Confi*gurationCommon, the terminal 101 determines that the time slot with which the symbol overlaps is not counted into N·K time slots, i.e., it is not counted as a time slot for the Msg5 repetition.

In an embodiment, if a configuration of the terminal 101 includes the *TDD-UL-DL-ConfigurationDedicated*, the terminal 101 determining the first time domain resource based on the *TDD-UL-DL-ConfigurationDedicated*, including: if the terminal 101 determines that a symbol indicated by a certain row in the used resource allocation table overlaps with a downlink symbol indicated by the *TDD-UL-DL-ConfigurationDedicated*, the terminal 101 determines that the time slot with which the symbol overlaps is not counted into the N·K time slots, i.e., it is not counted as a time slot for the Msg5 repetition.

In an embodiment, the terminal 101 determining the first time domain resource based on the SSB and/or PBCH block having an index, including: if the terminal 101 determines that a symbol indicated by a certain row in the used resource allocation table overlaps with a symbol of an SS/PBCH block provided by the *ssb-PositionsInBurst*, the terminal 101 determines that the time slot with which the symbol overlaps is not counted into the N·K time slots, i.e., it is not counted as a time slot for the Msg5 repetition.

In some embodiments, the terminal 101 performs transmission of the Msg5 based on Half Duplex-Frequency Division Duplexing (HD-FDD) in a paired spectrum. The terminal 101 and the network device 102 determine the first time domain resource based on at least one of the following information, the first time domain resource comprising at least one time slot determined based on the available slot counting mechanism: a Synchronization Signal Block (SSB) and/or a Physical Broadcast Channel (PBCH) block having an index; a transition time between a transmitter (Tx) and a receiver (Rx) of the terminal 101; or a transition time between a receiver (Rx) and a transmitter (Tx) of the terminal 101.

In an embodiment, the index of the SSB is provided by an Information Element *ssb-PositionsInBurst* (a position of the SSB in a burst).

In an embodiment, the SSB is a CD-SSB and/or an NCD-SSB.

In an embodiment, the terminal 101 determining the first time domain resource based on the SSB and/or PBCH block having an index, including: if the terminal 101 determines that a symbol indicated by a certain row in a used resource allocation table overlaps with a symbol of an SS/PBCH block provided by the *ssb-PositionsInBurst*, the terminal 101 determines that the time slot with which the symbol overlaps is not counted into the N·K time slots, i.e., it is not counted as a time slot for the Msg5 repetition.

In an embodiment, the terminal 101 determining the first time domain resource based on the transition time between Tx and Rx, including: if the terminal 101 determines that a symbol indicated by a certain row in the used resource allocation table overlaps with a symbol included in the transition time between Tx and Rx, the terminal 101 determines that the time slot with which the symbol overlaps is not counted into the N·K time slots, i.e., it is not counted as a time slot for the Msg5 repetition.

In an embodiment, the terminal 101 determining the first time domain resource based on the transition time between Rx and Tx, including: if the terminal 101 determines that a symbol indicated by a certain row in the used resource allocation table overlaps with a symbol included in the transition time between Rx and Tx, the terminal 101 determines that the time slot with which the symbol overlaps is not counted into the N·K time slots, i.e., it is not counted as a time slot for the Msg5 repetition.

In an embodiment, the terminal 101 may send third information to the network device, in which the third information indicates an HD-FDD type of the terminal 101.

In some embodiments, the name of the third information is not limited; it may be, for example, "HD-FDD type", etc.

In an embodiment, the third information is included in at least one of the following: resource information of an Msg1; an RRC signaling included in an Msg3; or MAC PDU information included in an Msg3.

In an embodiment, the resource information of the Msg1 may include at least one of: a time domain resource, a frequency domain resource, or a code domain resource.

In an embodiment, the RRC signaling included in the Msg3 may include at least one of: an RRCSetupRequest, an RRCResumeRequest, or an RRCReestablishmentRequest.

The RRCSetupRequest is used to request to establish an RRC connection, the RRCResumeRequest is used to request to resume an RRC connection, and the RRCReestablishmentRequest is used to request to re-establish an RRC connection.

In an embodiment, the RRC signaling included in the Msg3 may be an existing RRC signaling or other newly added RRC signaling.

In an embodiment, the MAC PDU information included in the Msg3 may include at least one of: an MAC subheader corresponding to an MAC SDU in the MAC PDU, a new LCID, a new MAC CE, or reusing a legacy MAC CE. The legacy MAC CE refers to an existing (or legacy) MAC CE supported by R16/R17.

For example, the third information may be sent to the network device 102 through a subheader corresponding to the MAC SDU in the MAC PDU including the MAC SDU. In an embodiment, the MAC PDU may be a PDU for sending any information of the Msg3.

In an embodiment, the MAC signaling may be an existing MAC signaling or other newly added MAC signaling.

In some embodiments, the terminal 101 determines the first time domain resource based on a number of Msg5 repetitions. For example, the number of Msg5 repetitions is 4. In some embodiments, the terminal 101 may determine 4 consecutive time slots as the first time domain resource. In some embodiments, the terminal 101 may determine 4 available time slots as the first time domain resource based on the available slot counting mechanism.

In some embodiments, the terminal 101 and the network device 102 may determine the first time domain resource simultaneously, or may have a temporal order and there is no limitation on the temporal order.

Step S2204, the terminal 101 repeatedly sends an Msg5.

In some embodiments, the terminal 101 repeatedly sends the Msg5 on the first time domain resource determined above.

In some embodiments, names of information etc. are not limited to those recorded in the embodiments. Terms such as "information", "message", "signal", "signaling", "report", "configuration", "indication", "instruction", "command", "channel", "parameter", "field", "symbol", "code", "codebook", "codeword", "codepoint", "bit", "data", "program", "chip" may be interchangeable.

In some embodiments, names of information etc. are not limited to those recorded in the embodiments. Terms such as "information", "message", "signal", "signaling", "report", "configuration", "indication", "instruction", "command", "channel", "parameter", "field", "symbol", "code", "codebook", "codeword", "codepoint", "bit", "data", "program", "chip" may be interchangeable.

In some embodiments, terms such as "physical downlink shared channel (PDSCH)", "DL data" may be interchangeable, and terms such as "physical uplink shared channel (PUSCH)", "UL data" may be interchangeable.

In some embodiments, terms such as "radio", "wireless", "radio access network (RAN)", "access network (AN)", "RAN-based" may be interchangeable.

In some embodiments, terms such as "resource block (RB)", "physical resource block (PRB)", "sub-carrier group (SCG)", "resource element group (REG)", "PRB pair", "RB pair", "resource element (RE)", "sub-carrier" may be interchangeable.

In some embodiments, "acquire", "obtain", "get", "receive", "transmit", "bidirectional transmission", "send and/or receive" can be interchanged, and can be interpreted as receiving from another entity, obtaining from a protocol, obtaining from a higher layer, processing by itself, autonomous implementation, etc.

In some embodiments, terms such as "send", "transmit", "report", "deliver", "transmission", "bidirectional transmission", "send and/or receive" may be interchangeable.

In some embodiments, terms such as "certain", "preset", "predefined", "set", "indicated", "some", "any", "first" can be interchanged. "Certain A", "preset A", "predefined A", "set A", "indicated A", "some A", "any A", "first A" can be interpreted as A pre-specified in a protocol, etc., or as A obtained through setting, configuration, or indication, etc., or as a specific A, some A, any A, or first A, etc., but is not limited thereto.

In some embodiments, determination or judgment can be performed by a value represented by 1 bit (0 or 1), or by a Boolean value represented by true or false, or by comparison of numerical values (e.g., comparison with a predetermined value), but is not limited thereto.

The communication method involved in the embodiments of the present disclosure may include at least one of steps S2201 to S2204. For example, step 2201 may be implemented as an independent embodiment, steps 2201+2203 may be implemented as an independent embodiment, steps 2201+2202+2203 may be implemented as an independent embodiment, steps 2201+2203+2204 may be implemented as an independent embodiment, steps 2202+2203+2204 may be implemented as an independent embodiment, steps 2201+2202+2203+2204 may be implemented as an independent embodiment, etc., but is not limited thereto.

In some embodiments, step 2201 is optional, and one or more of these steps may be omitted or replaced in different embodiments.

In some embodiments, step 2202 is optional, and one or more of these steps may be omitted or replaced in different embodiments.

In some embodiments, reference may be made to other optional implementations described before or after the description corresponding to FIG. 2B.

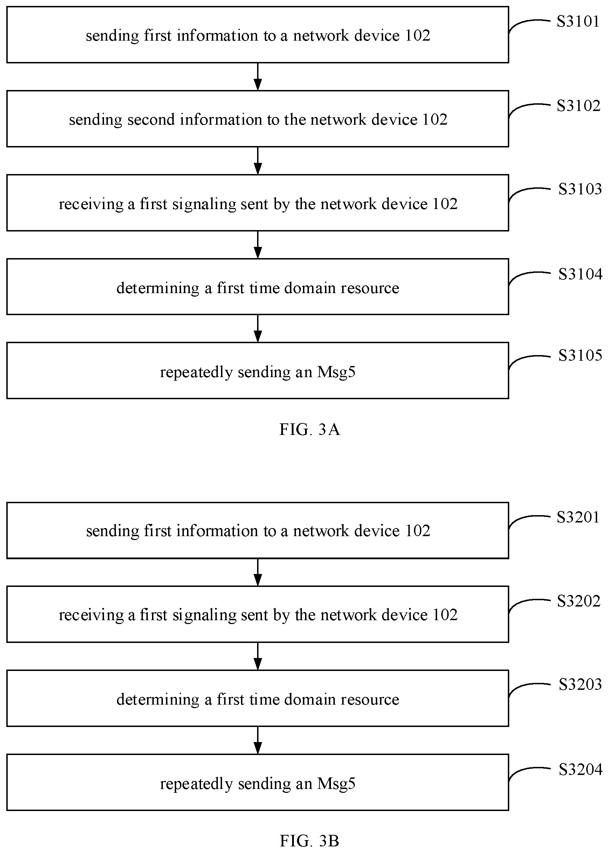

FIG. 3A is a flow diagram of an information processing method according to an embodiment of the present disclosure. As shown in FIG. 3A, an embodiment of the present disclosure relates to an information processing method, the method is performed by a terminal 101, and the method includes the following steps.

Step S3101, first information is sent to a network device 102.

For optional implementations of step S3101, reference may be made to the optional implementations of step S2101 in FIG. 2A and other related parts in the embodiments related to FIG. 2A, which are not repeated here.

Step S3102, second information is sent to the network device 102.

For optional implementations of step S3102, reference may be made to the optional implementations of step S2102 in FIG. 2A and other related parts in the embodiments related to FIG. 2A, which are not repeated here.

Step S3103, first signaling sent by the network device 102 is received.

For optional implementations of step S3103, reference may be made to the optional implementations of step S2103 in FIG. 2A and other related parts in the embodiments related to FIG. 2A, which are not repeated here.

Step S3104, a first time domain resource is determined.

For optional implementations of step S3104, reference may be made to the optional implementations of step S2104 in FIG. 2A and other related parts in the embodiments related to FIG. 2A, which are not repeated here.

Step S3105, an Msg5 is repeatedly sent.

For optional implementations of step S3105, reference may be made to the optional implementations of step S2105 in FIG. 2A and other related parts in the embodiments related to FIG. 2A, which are not repeated here.

The communication method involved in the embodiments of the present disclosure may include at least one of steps S3101 to S3105. For example, step 3101 may be implemented as an independent embodiment, steps 3101+3103 may be implemented as an independent embodiment, steps 3101+3102+3103 may be implemented as an independent embodiment, steps 3101+3103+3104+3105 may be implemented as an independent embodiment, steps 3103+3104+3105 may be implemented as an independent embodiment, steps 3102+3103+3104+3105 may be implemented as an independent embodiment, steps 3101+3102+3103+3104+3105 may be implemented as an independent embodiment, etc., but is not limited thereto.

In some embodiments, step 3102 is optional, and one or more of these steps may be omitted or replaced in different embodiments.

FIG. 3B is a flow diagram of an information processing method according to an embodiment of the present disclosure. As shown in FIG. 3B, an embodiment of the present disclosure relates to an information processing method, the method is performed by a terminal 101, and the method includes the following steps.

Step S3201, first information is sent to a network device 102.

For optional implementations of step S3201, reference may be made to the optional implementations of step S2101 in FIG. 2A, step S2201 in FIG. 2B, step S3101 in FIG. 3A, and other related parts in the embodiments related to FIGS. 2A, 2B, and 3A, which are not repeated here.

Step S3202, first signaling sent by the network device 102 is received.

For optional implementations of step S3202, reference may be made to the optional implementations of step S2103 in FIG. 2A, step S2202 in FIG. 2B, step S3103 in FIG. 3A, and other related parts in the embodiments related to FIGS. 2A, 2B, and 3A, which are not repeated here.

Step S3203, a first time domain resource is determined.

For optional implementations of step S3203, reference may be made to the optional implementations of step S2104 in FIG. 2A, step S2203 in FIG. 2B, step S3104 in FIG. 3A, and other related parts in the embodiments related to FIGS. 2A, 2B, and 3A, which are not repeated here.

Step S3204, an Msg5 is repeatedly sent.

For optional implementations of step S3204, reference may be made to the optional implementations of step S2105 in FIG. 2A, step S2204 in FIG. 2B, step S3105 in FIG. 3A, and other related parts in the embodiments related to FIGS. 2A, 2B, and 3A, which are not repeated here.

The communication method involved in the embodiments of the present disclosure may include at least one of steps S3201 to S3204. For example, step 3201 may be implemented as an independent embodiment, steps 3201+3203 may be implemented as an independent embodiment, steps 3201+3202+3203 may be implemented as an independent embodiment, steps 3201+3203+3204 may be implemented as an independent embodiment, steps 3202+3203+3204 may be implemented as an independent embodiment, steps 3201+3202+3203+3204 may be implemented as an independent embodiment, etc., but is not limited thereto.

In some embodiments, step 3201 is optional, and one or more of these steps may be omitted or replaced in different embodiments.

In some embodiments, step 3202 is optional, and one or more of these steps may be omitted or replaced in different embodiments.

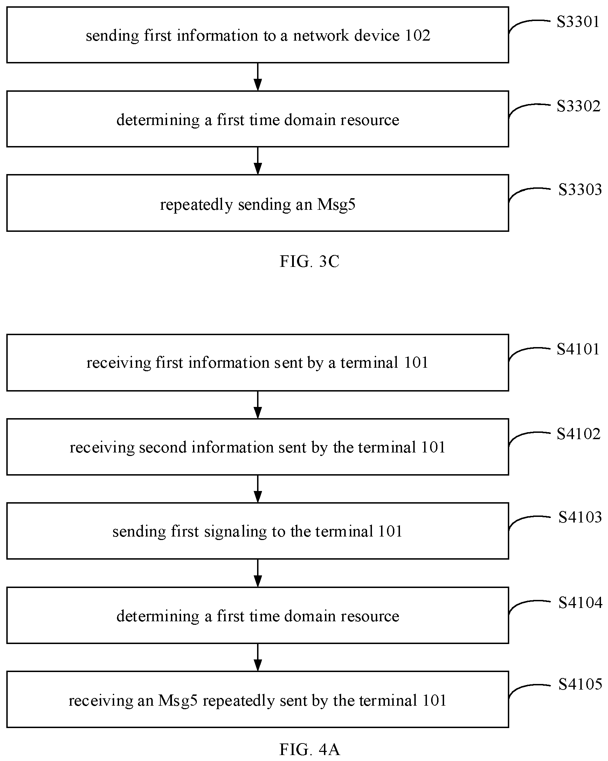

FIG. 3C is a flow diagram of an information processing method according to an embodiment of the present disclosure. As shown in FIG. 3C, an embodiment of the present disclosure relates to an information processing method, the method is performed by a terminal 101, and the method includes the following steps.

Step S3301, first information is sent to a network device 102.

For optional implementations of step S3301, reference may be made to the optional implementations of step S2101 in FIG. 2A, step S2201 in FIG. 2B, step S3101 in FIG. 3A, step S3201 in FIG. 3B, and other related parts in the embodiments related to FIGS. 2A, 2B, 3A, and 3B, which are not repeated here.

Step S3302, a first time domain resource is determined.

For optional implementations of step S3302, reference may be made to the optional implementations of step S2104 in FIG. 2A, step S2203 in FIG. 2B, step S3104 in FIG. 3A, step S3203 in FIG. 3B, and other related parts in the embodiments related to FIGS. 2A, 2B, 3A, and 3B, which are not repeated here.

Step S3303, an Msg5 is repeatedly sent.

For optional implementations of step S3303, reference may be made to the optional implementations of step S2105 in FIG. 2A, step S2204 in FIG. 2B, step S3105 in FIG. 3A, step S3204 in FIG. 3B, and other related parts in the embodiments related to FIGS. 2A, 2B, 3A, and 3B, which are not repeated here.

The communication method involved in the embodiments of the present disclosure may include at least one of steps S3301 to S3303. For example, step 3301 may be implemented as an independent embodiment, steps 3301+3302 may be implemented as an independent embodiment, steps 3302+3303 may be implemented as an independent embodiment, steps 3301+3302+3303 may be implemented as an independent embodiment, etc., but is not limited thereto.

FIG. 4A is a flow schematic diagram of an information processing method according to an embodiment of the present disclosure. As shown in FIG. 4A, an embodiment of the present disclosure relates to an information processing method, the method is performed by a network device 102, and the method includes the following steps.

Step S4101, first information sent by a terminal 101 is received.

For optional implementations of step S4101, reference may be made to the optional implementations of step S2101 in FIG. 2A and other related parts in the embodiments related to FIG. 2A, which are not repeated here.

Step S4102, second information sent by the terminal 101 is received.

For optional implementations of step S4102, reference may be made to the optional implementations of step S2102 in FIG. 2A and other related parts in the embodiments related to FIG. 2A, which are not repeated here.

In some embodiments, the network device 102 obtains the second information specified by a protocol.

In some embodiments, step S3101 is omitted, and the network device 102 autonomously learns the terminal capability indicated by the second information (supporting for Msg5 repetition).

Step S4103, first signaling is sent to the terminal 101.

For optional implementations of step S4103, reference may be made to the optional implementations of step S2103 in FIG. 2A and other related parts in the embodiments related to FIG. 2A, which are not repeated here.

Step S4104, a first time domain resource is determined.

For optional implementations of step S4104, reference may be made to the optional implementations of step S2104 in FIG. 2A and other related parts in the embodiments related to FIG. 2A, which are not repeated here.

Step S4105, an Msg5 repeatedly sent by the terminal 101 is received.

For optional implementations of step S4105, reference may be made to the optional implementations of step S2105 in FIG. 2A and other related parts in the embodiments related to FIG. 2A, which are not repeated here.

In an embodiment, the Msg5 is sent on the first time domain resource determined by the terminal 101. For optional implementations thereof, reference may be made to the optional implementations of step S2104 in FIG. 2A and other related parts in the embodiments related to FIG. 2A, which are not repeated here.

The communication method involved in the embodiments of the present disclosure may include at least one of steps S4101 to S4105. For example, step 4101 may be implemented as an independent embodiment, steps 4101+4103 may be implemented as an independent embodiment, steps 4101+4102+4103 may be implemented as an independent embodiment, steps 4101+4103+4104+4105 may be implemented as an independent embodiment, steps 4103+4104+4105 may be implemented as an independent embodiment, steps 4102+4103+4104+4105 may be implemented as an independent embodiment, steps 4101+4102+4103+4104+4105 may be implemented as an independent embodiment, etc., but is not limited thereto.

In some embodiments, step 4102 is optional, and one or more of these steps may be omitted or replaced in different embodiments.

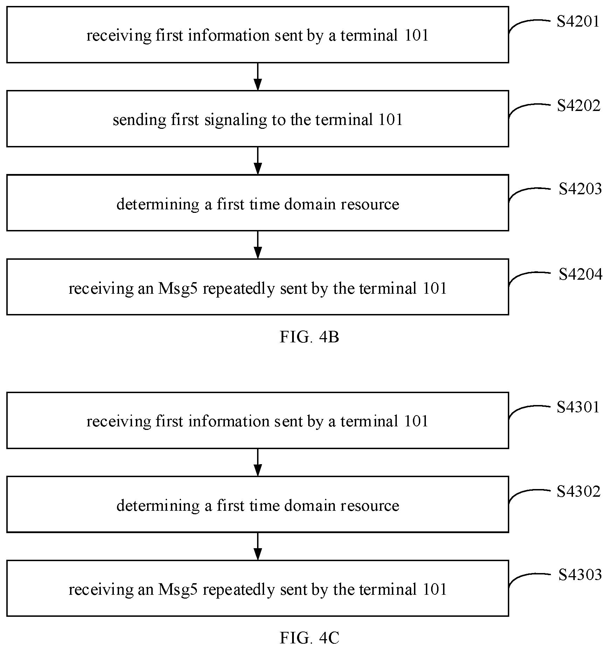

FIG. 4B is a flow diagram of an information processing method according to an embodiment of the present disclosure. As shown in FIG. 4B, an embodiment of the present disclosure relates to an information processing method, the method is performed by a network device 102, and the method includes the following steps.

Step S4201, first information sent by a terminal 101 is received.

For optional implementations of step S4201, reference may be made to the optional implementations of step S2101 in FIG. 2A, step S2201 in FIG. 2B, step S4101 in FIG. 4A, and other related parts in the embodiments related to FIGS. 2A, 2B, and 4A, which are not repeated here.

In some embodiments, the network device 102 obtains the first information specified by a protocol.

In some embodiments, step S3101 is omitted, and the network device 102 autonomously learns the terminal capability indicated by the first information (support for Msg5 repetition).

Step S4202, first signaling is sent to the terminal 101.

For optional implementations of step S4202, reference may be made to the optional implementations of step S2103 in FIG. 2A, step S2202 in FIG. 2B, step S4103 in FIG. 4A, and other related parts in the embodiments related to FIGS. 2A, 2B, and 4A, which are not repeated here.

Step S4203, a first time domain resource is determined.

For optional implementations of step S4203, reference may be made to the optional implementations of step S2104 in FIG. 2A, step S2203 in FIG. 2B, step S4104 in FIG. 4A, and other related parts in the embodiments related to FIGS. 2A, 2B, and 4A, which are not repeated here.

Step S4204, an Msg5 repeatedly sent by the terminal 101 is received.

For optional implementations of step S4204, reference may be made to the optional implementations of step S2105 in FIG. 2A, step S2204 in FIG. 2B, step S4105 in FIG. 4A, and other related parts in the embodiments related to FIGS. 2A, 2B, and 4A, which are not repeated here.

In an embodiment, the Msg5 is sent on the first time domain resource determined by the terminal 101. For optional implementations thereof, reference may be made to the optional implementations of step S2104 in FIG. 2A, and other related parts in the embodiments related to FIGS. 2A and 2B, which are not repeated here.

The communication method involved in the embodiments of the present disclosure may include at least one of steps S4201 to S4204. For example, step 4201 may be implemented as an independent embodiment, steps 4201+4203 may be implemented as an independent embodiment, steps 4201+4202+4203 may be implemented as an independent embodiment, steps 4201+4203+4204 may be implemented as an independent embodiment, steps 4202+4203+4204 may be implemented as an independent embodiment, steps 4201+4202+4203+4204 may be implemented as an independent embodiment, etc., but is not limited thereto.

In some embodiments, step 4201 is optional, and one or more of these steps may be omitted or replaced in different embodiments.

In some embodiments, step 4202 is optional, and one or more of these steps may be omitted or replaced in different embodiments.

FIG. 4C is a flow diagram of an information processing method according to an embodiment of the present disclosure. As shown in FIG. 4C, an embodiment of the present disclosure relates to an information processing method, the method is performed by a network device 102, and the method includes the following steps.

Step S4301, first information sent by a terminal 101 is received.

For optional implementations of step S4301, reference may be made to the optional implementations of step S2101 in FIG. 2A, step S2201 in FIG. 2B, step S4101 in FIG. 4A, step S4201 in FIG. 4B, and other related parts in the embodiments related to FIGS. 2A, 2B, 4A, and 4B, which are not repeated here.

Step S4302, a first time domain resource is determined.

For optional implementations of step S4302, reference may be made to the optional implementations of step S2104 in FIG. 2A, step S2203 in FIG. 2B, step S4104 in FIG. 4A, step S4203 in FIG. 4B, and other related parts in the embodiments related to FIGS. 2A, 2B, 4A, and 4B, which are not repeated here.

Step S4303, an Msg5 repeatedly sent by the terminal 101 is received.

For optional implementations of step S4303, reference may be made to the optional implementations of step S2105 in FIG. 2A, step S2204 in FIG. 2B, step S4105 in FIG. 4A, step S4204 in FIG. 4B, and other related parts in the embodiments related to FIGS. 2A, 2B, 4A, and 4B, which are not repeated here.

In an embodiment, the Msg5 is sent on the first time domain resource determined by the terminal 101. For optional implementations thereof, reference may be made to the optional implementations of step S2104 in FIG. 2A, step S2203 in FIG. 2B, and other related parts in the embodiments related to FIGS. 2A and 2B, which are not repeated here.

The communication method involved in the embodiments of the present disclosure may include at least one of steps S4301 to S4303. For example, step 4301 may be implemented as an independent embodiment, steps 4301+4302 may be implemented as an independent embodiment, steps 4302+4303 may be implemented as an independent embodiment, steps 4301+4302+4303 may be implemented as an independent embodiment, etc., but is not limited thereto.

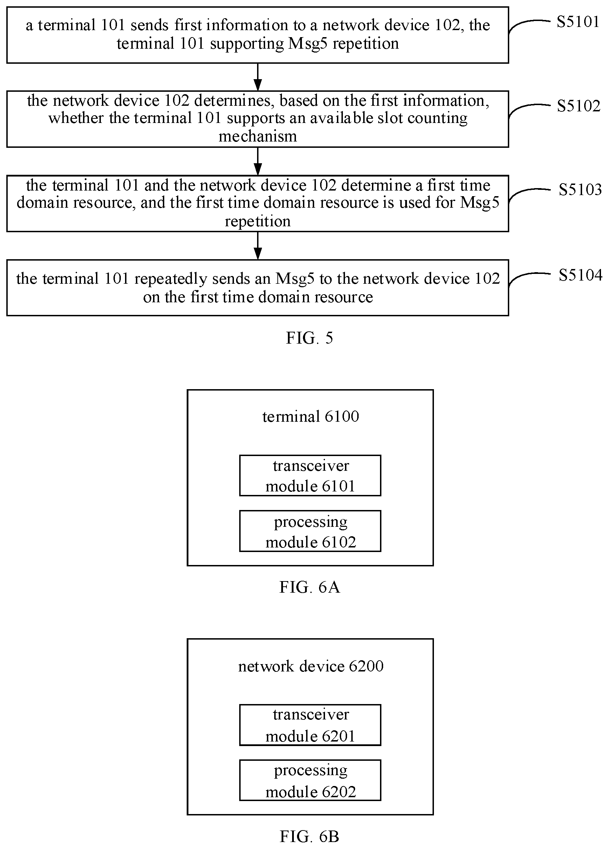

FIG. 5 is a flow diagram of an information processing method according to an embodiment of the present disclosure. As shown in FIG. 5, an embodiment of the present disclosure relates to a method for a communication system 100, the method includes the following steps.

Step S5101, a terminal 101 sends first information to a network device 102, the terminal 101 supporting Msg5 repetition.

For optional implementations of step S5101, reference may be made to the steps in any one or more of the embodiments described in FIGS. 2A-2B, 3A-3C, 4A-4C, and other related parts in the embodiments related to FIGS. 2A-2B, 3A-3C, 4A-4C.

Step S5102, the network device 102 determines, based on the first information, whether the terminal 101 supports an available slot counting mechanism.

For optional implementations of step S5102, reference may be made to the steps in any one or more of the embodiments described in FIGS. 2A-2B, 3A-3C, 4A-4C, and other related parts in the embodiments related to FIGS. 2A-2B, 3A-3C, 4A-4C.

Step S5103, the terminal 101 and the network device 102 determine a first time domain resource, and the first time domain resource is used for Msg5 repetition.

For optional implementations of step S5103, reference may be made to the steps in any one or more of the embodiments described in FIGS. 2A-2B, 3A-3C, 4A-4C, and other related parts in the embodiments related to FIGS. 2A-2B, 3A-3C, 4A-4C.

Step S5104, the terminal 101 repeatedly sends an Msg5 to the network device 102 on the first time domain resource.

For optional implementations of step S5104, reference may be made to the steps in any one or more of the embodiments described in FIGS. 2A-2B, 3A-3C, 4A-4C, and other related parts in the embodiments related to FIGS. 2A-2B, 3A-3C, 4A-4C.

In some embodiments, the above method may include the methods described in the above embodiments of the communication system side, terminal side, network device side, etc., which is not repeated here.

In this implementation or embodiments, under the condition of no contradiction, the steps can be independent, arbitrarily combined, or exchanged in order, optional implementations or examples may be arbitrarily combined, and may be arbitrarily combined with any steps of other implementations or other embodiments.

The following is an introduction to the methods described in the above embodiments.

In embodiments of the present application, an available slot counting mechanism is introduced for Msg5 repetition.

In some embodiments, the available slot counting is used as an independent feature and can be used in combination with the Msg5 repetition.

In an embodiment, the terminal can report the terminal capability related to available slot counting through at least one of the following methods: at least one of a time domain resource, a frequency domain resource, and a code domain resource of an Msg1; an RRC signaling such as an RRCSetupRequest, an RRCResumeRequest, or an RRCReestablishmentRequest included in an Msg3; or an MAC subheader corresponding to an MAC SDU in an Msg3 MAC PDU, a new LCID, a new MAC CE, or reusing a legacy MAC CE.

The network device (gNB) can enable or disable the available slot counting mechanism for the Msg5 repetition and subsequent PUSCH repetition based on at least one of the following signaling: an SIB1 or OSI; an RRC signaling included in an Msg4, such as RRCSetup, RRCResume, RRCReestablishment, etc.; or scheduling DCI for Msg5 PUSCH.

In an embodiment, when the gNB enables the available slot counting based on the SIB1 or OSI, but the terminal reports that it does not support the available slot counting, both the gNB and the terminal perform the available slot counting based on consecutive slots.

In an embodiment, if at least two of the SIB1/OSI, the RRC signaling included in the Msg4, and the DCI can be used for enabling the available slot counting, the priorities of them are DCI > RRC signaling included in the Msg4 > SIB1/OSI.

In some embodiments, if the terminal supports the Msg5 repetition, it may support the available slot counting mechanism.

When the terminal reports the Msg5 repetition capability through at least one of the following methods, it implicitly reports that the terminal supports the available slot counting: time domain and/or frequency domain and/or code domain resources of an Msg1; an RRC signaling such as an RRCSetupRequest, an RRCResumeRequest, or an RRCReestablishmentRequest included in an Msg3; an MAC subheader corresponding to an MAC SDU in an Msg3 MAC PDU, a new LCID, a new MAC CE, or reusing a legacy MAC CE.

In an embodiment, the gNB can enable or disable the available slot counting mechanism for the Msg5 repetition and subsequent PUSCH repetition based on at least one of the following signaling: an SIB1 or OSI, in which when the gNB enables the available slot counting based on the SIB1 or OSI, but the terminal reports that it does not support the available slot counting, both the gNB and the terminal side perform the available slot counting based on consecutive slots; an RRC signaling included in an Msg4, such as RRCSetup, RRCResume, RRCReestablishment, etc.; or scheduling DCI for an Msg5 PUSCH.

In an embodiment, if at least two of SIB1/OSI, the RRC signaling included in the Msg4, and the DCI can be used for enabling the available slot counting, the priorities of them are DCI > RRC signaling included in Msg4 > SIB1/OSI.

In some embodiments, for the available slot counting mechanism for the Msg5 repetition, at least one of the following conditions is considered.

For an unpaired spectrum, at least one of the following information is considered: *TDD-UL-DL-ConfigurationCommon*; *TDD-UL-DL-ConfigurationDedicated*; or an SSB indexed by *ssb-PositionsInBurst*.

In an embodiment, the SSB is a Cell Defining SSB (CD-SSB) and/or a Non-Cell Defining SSB (NCD-SSB).

For HD-FDD using a paired spectrum, at least one of the following information is considered: an SSB indexed by *ssb-PositionsInBurst*; a transition time between a Tx and an Rx; or a transition time between an Rx and a Tx.

In an embodiment, for this method, the terminal can report the HD-FDD terminal type through Msg1/Msg3 (the specific reporting signaling design can be the same as the examples in the previous embodiments).

An embodiment of the present disclosure further proposes an apparatus for implementing any of the above methods. For example, an apparatus is disclosed, the apparatus includes units or modules for performing the steps executed by the terminal in any of the above methods. As another example, another apparatus is disclosed, including units or modules for performing the steps executed by a network device (e.g., an access network device, a core network function node, a core network device, etc.) in any of the above methods.

It should be understood that the division of units or modules in the above apparatuses is only a logical function division. In actual implementation, they may be fully or partially integrated into one physical entity or physically separated. Furthermore, the units or modules in the apparatus may be implemented in the form of a processor invoking software. For example, the apparatus includes a processor, the processor is connected to a memory, the memory stores instructions, and the processor invokes the instructions stored in the memory to implement any of the above methods or implement the functions of the units or modules of the above apparatus, in which the processor is, for example, a general-purpose processor, such as a Central Processing Unit (CPU) or a microprocessor, and the memory is a memory inside the apparatus or a memory outside the apparatus. Or, the units or modules in the apparatus may be implemented in the form of hardware circuits, and the functions of some or all of the units or modules may be implemented through the design of hardware circuits. The above hardware circuit may be understood as one or more processors. For example, in an implementation, the above hardware circuit is an application-specific integrated circuit (ASIC), and the functions of some or all of the units or modules are implemented by designing the logical relationships of circuit elements. For another example, in another implementation, the above hardware circuit may be implemented by a programmable logic device (PLD), taking a Field Programmable Gate Array (FPGA) as an example, it may include a large number of logic gate circuits, and the connection relationships between the logic gate circuits are configured through a configuration file, thereby implementing the functions of some or all of the units or modules. All units or modules of the above apparatus may be implemented entirely in the form of a processor invoking software, or entirely in the form of hardware circuits, or partially in the form of a processor invoking software and the remaining part in the form of hardware circuits.

In embodiments of the present disclosure, a processor is a circuit with a signal processing capability. In an implementation, the processor may be a circuit with instruction reading and execution capability, such as a Central Processing Unit (CPU), a microprocessor, a graphics processing unit (GPU) (which may be understood as a microprocessor), or a digital signal processor (DSP), etc. In another implementation, the processor may implement a certain function through the logical relationship of hardware circuits, and the logical relationship of the above hardware circuits is fixed or reconfigurable. For example, the processor is a hardware circuit implemented by an application-specific integrated circuit (ASIC) or a programmable logic device (PLD), such as an FPGA. In a reconfigurable hardware circuit, a process of the processor loading a configuration file to implement the hardware circuit configuration can be understood as a process of the processor loading instructions to implement the functions of some or all of the above units or modules. Furthermore, it may also be a hardware circuit designed for artificial intelligence, which may be understood as an ASIC, such as a Neural Network Processing Unit (NPU), a Tensor Processing Unit (TPU), a Deep learning Processing Unit (DPU), etc.

FIG. 6A is a schematic diagram of a terminal according to an embodiment of the present disclosure. As shown in FIG. 6A, a terminal 6100 may include: at least one of a transceiver module 6101, or a processing module 6102, etc. In some embodiments, the transceiver module is configured to send first information to a network device, wherein the first information is used for determining whether the terminal supports an available slot counting mechanism; the processing module is configured to determine a first time domain resource, wherein the first time domain resource is used for the Msg5 repetition; and the transceiver module is further configured to repeatedly send an Msg5 to the network device on the first time domain resource.

In an embodiment, the transceiver module is configured to perform at least one of the communication steps such as sending and/or receiving step (e.g., step S2101, step S2102, step S2103, step S2105, step S2201, step S2202, step S2204, but not limited thereto) performed by the terminal 101 in any of the above methods, which is not repeated here. In an embodiment, the processing module is configured to perform at least one of other steps (e.g., step S2104, step S2203, but not limited thereto) performed by the terminal 101 in any of the above methods, which is not repeated here.

FIG. 6B is a schematic diagram of a network device according to an embodiment of the present disclosure. As shown in FIG. 6B, a network device 6200 may include: at least one of a transceiver module 6201, or a processing module, etc. In some embodiments, the transceiver module is configured to receive first information sent by a terminal, the terminal supporting Message 5 (Msg5) repetition; the processing module is configured to determine, based on the first information, whether the terminal supports an available slot counting mechanism; the processing module is further configured to determine a first time domain resource, wherein the first time domain resource is used for the Msg5 repetition; and the transceiver module is further configured to receive an Msg5 sent by the terminal on the first time domain resource.

In an embodiment, the transceiver module is configured to perform at least one of the communication steps such as sending and/or receiving step (e.g., step S2101, step S2102, step S2103, step S2105, step S2201, step S2202, step S2204, but not limited thereto) performed by the network device 102 in any of the above methods, which is not repeated here. In an embodiment, the processing module is configured to perform at least one of other steps (e.g., step S2104, step S2203, but not limited thereto) performed by the network device 102 in any of the above methods, which is not repeated here.

In some embodiments, the transceiver module may include a sending module and/or a receiving module, which may be separate or integrated. In an embodiment, the transceiver module may be interchanged with a transceiver.

In some embodiments, the processing module may be one module or may include multiple sub-modules. In an embodiment, the multiple sub-modules respectively perform all or part of the steps required to be performed by the processing module. In an embodiment, the processing module may be interchanged with a processor.

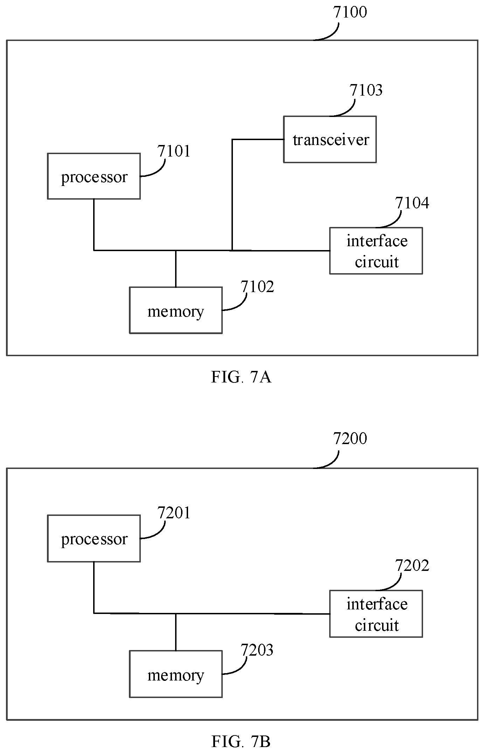

FIG. 7A is a schematic structural diagram of a communication device 7100 according to an embodiment of the present disclosure. The communication device 7100 may be a network device (e.g., an access network device, a core network device, etc.), or a terminal (e.g., a user equipment, etc.), or a chip, a chip system, or a processor that supports the network device to implement any of the above methods, or a chip, a chip system, or a processor that supports the terminal to implement any of the above methods. The communication device 7100 may be used to implement the methods described in the above method embodiments, and reference may be made to the descriptions in the above method embodiments for details.

As shown in FIG. 7A, the communication device 7100 includes one or more processors 7101. The processor 7101 may be a general-purpose processor or a special-purpose processor, etc., for example, a baseband processor or a central processing unit. The baseband processor may be used to process communication protocols and communication data, and the central processor may be used to control a communication device (e.g., a base station, a baseband chip, a terminal device, a terminal device chip, a DU or a CU, etc.), execute programs, and process data of a program. The communication device 7100 is used to perform any of the above methods.

In some embodiments, the communication device 7100 further includes one or more memories 7102 for storing instructions. In an embodiment, all or part of the memory 7102 may be located outside the communication device 7100.

In some embodiments, the communication device 7100 further includes one or more transceivers 7103. When the communication device 7100 includes one or more transceivers 7103, the transceiver 7103 performs at least one of the communication steps such as sending and receiving in the above methods (e.g., step S2101, step S2102, step S2103, step S2105, step S2201, step S2202, step S2204, but not limited thereto), and the processor 7101 performs at least one of other steps (e.g., step S2104, step S2203, but not limited thereto).

In some embodiments, a transceiver may include a receiver and a transmitter, and the receiver and the transmitter may be separate or integrated. In an embodiment, terms such as transceiver, transceiving unit, transceiver machine, transceiving circuit may be interchangeable, terms such as transmitter, sending unit, transmitter machine, sending circuit may be interchangeable, and terms such as receiver, receiving unit, receiver machine, receiving circuit may be interchangeable.

In some embodiments, the communication device 7100 further includes one or more interface circuits 7104, the interface circuit 7104 is connected to the memory 7102, and the interface circuit 7104 may be used to receive signals from the memory 7102 or other devices, and may be used to send signals to the memory 7102 or other devices. For example, the interface circuit 7104 may read instructions stored in the memory 7102 and send the instructions to the processor 7101.

The communication device 7100 described in the above embodiments may be a network device or a terminal, but the scope of the communication device 7100 described in the present disclosure is not limited thereto, and the structure of the communication device 7100 may not be limited by FIG. 7A. The communication device may be an independent device or a part of a larger device. For example, the communication device may be: 1) an independent integrated circuit (IC), or a chip, or a chip system or subsystem; (2) a set of one or more ICs, optionally, the set of one or more ICs may also include a storage component for storing data and programs; (3) an ASIC, such as a modem; (4) a module embeddable in other devices; (5) a receiver, a terminal, a smart terminal, a cellular phone, a wireless device, a handheld device, a mobile unit, a vehicle-mounted device, a network device, a cloud device, an artificial intelligence device, etc.; (6) others, etc.

FIG. 7B is a schematic diagram of a chip 7200 according to an embodiment of the present disclosure. For the case where the communication device 7100 may be a chip or a chip system, reference may be made to the schematic structural diagram of the chip 7200 shown in FIG. 7B, but is not limited thereto.

The chip 7200 includes one or more processors 7201, and the chip 7200 is used to perform any of the above methods.

In some embodiments, the chip 7200 further includes one or more interface circuits 7202. In an embodiment, the interface circuit 7202 is connected to a memory 7203, and the interface circuit 7202 may be used to receive signals from the memory 7203 or other devices, and the interface circuit 7202 may be used to send signals to the memory 7203 or other devices. For example, the interface circuit 7202 may read instructions stored in the memory 7203 and send the instructions to the processor 7201.

In some embodiments, the interface circuit 7202 performs at least one of the communication steps (e.g., step S2101, step S2102, but not limited thereto) such as sending and/or receiving step in the above methods, and the processor 7201 performs at least one of other steps (e.g., step S2103, but not limited thereto).

In some embodiments, terms such as interface circuit, interface, transceiver pin, transceiver may be interchangeable.

In some embodiments, the chip 7200 further includes one or more memories 7203 for storing instructions. In an embodiment, all or part of the memory 7203 may be located outside the chip 7200.

The present disclosure also proposes a storage medium having instructions stored thereon that, when executed on the communication device 7100, cause the communication device 7100 to perform any of the above methods. In an embodiment, the storage medium is an electronic storage medium. In an embodiment, the storage medium is a computer-readable storage medium, but is not limited thereto, and may also be a storage medium readable by other devices. In an embodiment, the storage medium may be a non-transitory storage medium, but is not limited thereto, and may also be a transitory storage medium.

The present disclosure also proposes a program product that, when executed by the communication device 7100, causes the communication device 7100 to perform any of the above methods. In an embodiment, the above program product is a computer program product.

The present disclosure also proposes a computer program that, when executed on a computer, causes the computer to perform any of the above methods.

In the above embodiments, it may be implemented wholly or partially by software, hardware, firmware, or any combination thereof. When implemented using software, it may be implemented wholly or partially in the form of a computer program product. The computer program product includes one or more computer programs. When the computer program is loaded and executed on a computer, the processes or functions described in the embodiments of the present disclosure are generated in whole or in part. The computer may be a general-purpose computer, a special-purpose computer, a computer network, or other programmable device. The computer program may be stored in a computer-readable storage medium or transmitted from one computer-readable storage medium to another, for example, the computer program may be transmitted from one website site, computer, server, or data center to another website site, computer, server, or data center by wire (e.g., coaxial cable, optical fiber, digital subscriber line (DSL)) or wirelessly (e.g., infrared, wireless, microwave, etc.). The computer-readable storage medium may be any available medium that can be accessed by a computer or a data storage device such as a server, data center, etc., that includes an integration of one or more available media. The available medium may be a magnetic medium (e.g., a floppy disk, a hard disk, a magnetic tape), an optical medium (e.g., a digital video disc (DVD)), or a semiconductor medium (e.g., a solid state disk (SSD)), etc.

Those skilled in the art may appreciate that the units and algorithm steps of the examples described in conjunction with the embodiments disclosed herein may be implemented in electronic hardware, or a combination of computer software and electronic hardware. Whether these functions are performed in hardware or software depends on the specific application and design constraints of the technical solution. Those skilled may implement the described functions using different methods for each specific application, but such implementation should not be considered beyond the scope of the present disclosure.

It may be clearly understood by those skilled in the art that, for the convenience and brevity of description, for the specific working processes of the system, devices, and units described above, reference may be made to the corresponding processes in the aforementioned method embodiments, and is not repeated here.

The above is merely detailed implementations of the present disclosure, but the scope of protection of the present disclosure is not limited thereto. Any person skilled in the art can easily conceive of changes or substitutions within the technical scope disclosed in the present disclosure, which should be covered within the scope of protection of the present disclosure. Therefore, the scope of protection of the present disclosure are subject to the scope of protection of the claims.

## Claims

1. An information processing method, performed by a terminal, the terminal supporting Message 5 (Msg5) repetition, the method comprising:
sending first information to a network device, wherein the first information is used for determining whether the terminal supports an available slot counting mechanism;
determining a first time domain resource, wherein the first time domain resource is used for Msg5 repetition; and
repeatedly sending an Msg5 to the network device on the first time domain resource.

2. The method according to claim 1, further comprising:
sending second information to the network device, wherein the second information indicates that the terminal supports the Msg5 repetition.

3. The method according to claim 1, wherein the first information indicates that the terminal supports the Msg5 repetition; the first information is used for determining that the terminal supports the available slot counting mechanism.

4. The method according to claim 2 or 3, further comprising:
receiving a first signaling sent by the network device, the first signaling indicating an enabling state of the available slot counting mechanism.

5. The method according to claim 4, wherein the first signaling indicates that the enabling state of the available slot counting mechanism is enabled, and the terminal does not support the available slot counting mechanism, and determining the first time domain resource comprises:
determining the first time domain resource based on consecutive time slots.

6. The method according to claim 4, wherein the first signaling comprises at least one of:
a System Information Block (SIB);
Other System Information (OSI);
a Radio Resource Control (RRC) signaling comprised in a Message 4 (Msg4); or
Downlink Control Information (DCI) for scheduling a Physical Uplink Shared Channel (PUSCH), wherein the PUSCH is configured to carry the Msg5.

7. The method according to any one of claims 1-4, wherein the terminal supports the available slot counting mechanism, and determining the first time domain resource comprises:
performing, by the terminal, the Msg5 repetition in an unpaired spectrum, and determining the first time domain resource based on at least one of the following information, the first time domain resource comprising at least one time slot determined based on the available slot counting mechanism:
Timing Division Duplexing Uplink Downlink Common Configuration (TDD-UL-DL-ConfigurationCommon);
Timing Division Duplexing Uplink Downlink Dedicated Configuration (TDD-UL-DL-ConfigurationDedicated); or
a Synchronization Signal Block (SSB) and/or a Physical Broadcast Channel (PBCH) block having an index.

8. The method according to any one of claims 1-4, wherein the terminal supports the available slot counting mechanism, and determining the first time domain resource comprises:
performing, by the terminal, the Msg5 repetition based on Half Duplex-Frequency Division Duplexing (HD-FDD) in a paired spectrum, and determining the first time domain resource based on at least one of the following information, the first time domain resource comprising at least one time slot determined based on the available slot counting mechanism:
a Synchronization Signal Block (SSB) and/or a Physical Broadcast Channel (PBCH) block having an index;
a transition time between a transmitter and a receiver of the terminal; or
a transition time between a receiver and a transmitter of the terminal.

9. The method according to claim 8, further comprising:
sending third information to the network device, wherein the third information indicates an HD-FDD type of the terminal.

10. The method according to any one of claims 1-9, wherein the first information is comprised in at least one of:
resource information of a Message 1 (Msg1), the resource information comprising at least one of a time domain resource, a frequency domain resource, or a code domain resource;
a Radio Resource Control (RRC) signaling comprised in a Message 3 (Msg3); or
uplink Medium Access Control (MAC) Protocol Data Unit (PDU) information comprised in a Message 3 (Msg3).

11. The method according to claim 2, wherein the second information is comprised in at least one of:
resource information of an Msg1, the resource information comprising at least one of a time domain resource, a frequency domain resource, or a code domain resource;
an RRC signaling comprised in an Msg3; or
uplink MAC PDU information comprised in an Msg3.

12. The method according to claim 9, wherein the third information is comprised in at least one of:
resource information of an Msg1, the resource information comprising at least one of a time domain resource, a frequency domain resource, or a code domain resource;
an RRC signaling comprised in an Msg3; or
uplink MAC PDU information comprised in an Msg3.

13. An information processing method, performed by a network device, the method comprising:
receiving first information sent by a terminal, the terminal supporting Message 5 (Msg5) repetition;
determining, based on the first information, whether the terminal supports an available slot counting mechanism;
determining a first time domain resource, wherein the first time domain resource is used for the Msg5 repetition; and
receiving an Msg5 sent by the terminal on the first time domain resource.

14. The method according to claim 13, wherein the first information indicates whether the terminal supports the available slot counting mechanism; the method further comprising:
receiving second information sent by the terminal, wherein the second information indicates that the terminal supports the Msg5 repetition.

15. The method according to claim 13, wherein the first information indicates that the terminal supports the Msg5 repetition; the method further comprising:
determining, based on the first information, that the terminal supports the available slot counting mechanism.

16. The method according to claim 14 or 15, further comprising:
sending a first signaling to the terminal, the first signaling indicating an enabling state of the available slot counting mechanism.

17. The method according to claim 16, wherein the first signaling indicates that the enabling state of the available slot counting mechanism is enabled, and the terminal does not support the available slot counting mechanism, and determining the first time domain resource comprises:
determining the first time domain resource based on consecutive time slots.

18. The method according to claim 16, wherein the first signaling comprises at least one of:
a System Information Block (SIB) or Other System Information (OSI);
a Radio Resource Control (RRC) signaling included in a Message 4 (Msg4); or
Downlink Control Information (DCI) for scheduling a Physical Uplink Shared Channel (PUSCH), wherein the PUSCH is configured to carry the Msg5.

19. The method according to any one of claims 13-16, wherein the terminal supports the available slot counting mechanism, and determining the first time domain resource comprises:
the terminal performing the Msg5 repetition in an unpaired spectrum, determining the first time domain resource based on at least one of the following information, the first time domain resource comprising at least one time slot determined based on the available slot counting mechanism:
Timing Division Duplexing Uplink Downlink Common Configuration (TDD-UL-DL-ConfigurationCommon);
Timing Division Duplexing Uplink Downlink Dedicated Configuration (TDD-UL-DL-ConfigurationDedicated); or
a Synchronization Signal Block (SSB) and/or a Physical Broadcast Channel (PBCH) block having an index.

20. The method according to any one of claims 13-16, wherein the terminal supports the available slot counting mechanism, and determining the first time domain resource comprises:
the terminal performing the Msg5 repetition based on Half Duplex-Frequency Division Duplexing (HD-FDD) in a paired spectrum, determining the first time domain resource based on at least one of the following information, the first time domain resource comprising at least one time slot determined based on the available slot counting mechanism:
a Synchronization Signal Block (SSB) and/or a Physical Broadcast Channel (PBCH) block having an index;
a transition time between a transmitter and a receiver of the terminal; or
a transition time between a receiver and a transmitter of the terminal.

21. The method according to claim 20, further comprising:
receiving third information sent by the terminal, wherein the third information indicates an HD-FDD type of the terminal.

22. The method according to any one of claims 13-21, wherein the first information is comprised in at least one of:
resource information of a Message 1 (Msg1), the resource information comprising at least one of a time domain resource, a frequency domain resource, or a code domain resource;
a Radio Resource Control (RRC) signaling comprised in a Message 3 (Msg3); or
uplink Medium Access Control (MAC) Protocol Data Unit (PDU) information comprised in a Message 3 (Msg3).

23. The method according to claim 14, wherein the second information is comprised in at least one of:
resource information of an Msg1, the resource information comprising at least one of a time domain resource, a frequency domain resource, or a code domain resource;
an RRC signaling comprised in an Msg3; or
uplink MAC PDU information comprised in an Msg3.

24. The method according to claim 21, wherein the third information is comprised in at least one of:
resource information of an Msg1, the resource information comprising at least one of a time domain resource, a frequency domain resource, or a code domain resource;
an RRC signaling comprised in an Msg3; or
uplink MAC PDU information comprised in an Msg3.

25. An information processing method, comprising:
sending, by a terminal, first information to a network device, the terminal supporting Message 5 (Msg5) repetition;
determining, based on the first information by the network device, whether the terminal supports an available slot counting mechanism;
determining, by the terminal and the network device, a first time domain resource, wherein the first time domain resource is used for the Msg5 repetition; and
repeatedly sending, by the terminal, an Msg5 to the network device on the first time domain resource.

26. A terminal, comprising:
a transceiver module, configured to send first information to a network device, wherein the first information is used for determining whether the terminal supports an available slot counting mechanism; and
a processing module, configured to determine a first time domain resource, wherein the first time domain resource is used for Message 5 (Msg5) repetition;
wherein the transceiver module is further configured to repeatedly send an Msg5 to the network device on the first time domain resource.

27. A network device, comprising:
a transceiver module, configured to receive first information sent by a terminal, the terminal supporting Message 5 (Msg5) repetition; and
a processing module, configured to determine, based on the first information, whether the terminal supports an available slot counting mechanism;
wherein the processing module is further configured to determine a first time domain resource, wherein the first time domain resource is used for the Msg5 repetition; the transceiver module is further configured to receive an Msg5 sent by the terminal on the first time domain resource.

28. A terminal, comprising:
one or more processors;
wherein the terminal is configured to execute the information processing method according to any one of claims 1-12.

29. A network device, comprising:
one or more processors;
wherein the network device is configured to execute the information processing method according to any one of claims 13-24.

30. A communication system, comprising a terminal and a network device, wherein the terminal is configured to implement the information processing method according to any one of claims 1-12, and the network device is configured to implement the information processing method according to any one of claims 13-24.

31. A storage medium for storing instructions that, when executed on a communication device, cause the communication device to execute the information processing method according to any one of claims 1-12 or 13-24.
